(19) Europäisches Patentamt

European Patent Office

Office européen des brevets

(11) **EP 4 440 204 A1**

(12) **EUROPEAN PATENT APPLICATION**
published in accordance with Art. 153(4) EPC

(43) Date of publication:
**02.10.2024 Bulletin 2024/40**

(21) Application number: **22911692.6**

(22) Date of filing: **06.12.2022**

(51) International Patent Classification (IPC):
**H04W 52/02** (2009.01)  **H04W 72/04** (2023.01)

(52) Cooperative Patent Classification (CPC):
**H04W 52/02; H04W 72/04;** Y02D 30/70

(86) International application number:
**PCT/KR2022/019735**

(87) International publication number:
**WO 2023/121059 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 KR 20210187630**

(71) Applicant: **Samsung Electronics Co., Ltd.**
**Suwon-si, Gyeonggi-do 16677 (KR)**

(72) Inventors:
• **KIM, Youngbum**
  **Suwon-si, Gyeonggi-do 16677 (KR)**
• **KIM, Younsun**
  **Suwon-si, Gyeonggi-do 16677 (KR)**
• **RYU, Hyunsuk**
  **Suwon-si, Gyeonggi-do 16677 (KR)**
• **BAE, Taehan**
  **Suwon-si, Gyeonggi-do 16677 (KR)**

(74) Representative: **Gulde & Partner**
**Patent- und Rechtsanwaltskanzlei mbB**
**Wallstraße 58/59**
**10179 Berlin (DE)**

(54) **METHOD AND DEVICE FOR REDUCING BASE STATION ENERGY CONSUMPTION IN WIRELESS COMMUNICATION SYSTEM**

(57) The present invention relates to a communication technique which combines, with IoT technology, a 5G communication system for supporting higher data transmission rates than 4G systems, and a system therefor. The present invention can be applied to intelligent services (for example, smart homes, smart buildings, smart cities, smart cars or connected cars, healthcare, digital education, retail businesses, security- and safety-related services, etc.) on the basis of 5G communication technology and IoT-related technology. Disclosed are a method and device for reducing the power consumption of a base station.

FIG. 13

**EP 4 440 204 A1**

**Description**

**[Technical Field]**

The disclosure relates to a method and apparatus for reducing energy consumption of a base station in a wireless communication system.

**[Background Art]**

To meet the ever increasing demand for wireless data traffic since the commercialization of 4th generation (4G) communication systems, efforts have been made to develop 5th generation (5G) or 5G advanced communication systems. As such, 5G or 5G advanced communication systems are also called "beyond 4G network system" or "post Long Term Evolution (LTE) system". To achieve high data rates, 5G communication systems define operations in the extremely high frequency (mmWave) band (e.g., 28 GHz band). To decrease path loss of radio waves and increase the transmission distance thereof in the mmWave band, various technologies including beamforming, massive multiple-input multiple-output (massive MIMO), full dimensional MIMO (FD-MIMO), array antennas, analog beamforming, and large scale antennas are applied to 5G communication systems. To improve system networks in 5G communication systems, technology development is under way regarding evolved small cells, advanced small cells, cloud radio access networks (cloud RANs), ultra-dense networks, device-to-device (D2D) communication, wireless backhaul, moving networks, cooperative communication, coordinated multi-points (CoMP), interference cancellation, and the like.

Meanwhile, the Internet is evolving from a human centered network where humans create and consume information into the Internet of Things (IoT) where distributed elements such as things exchange and process information. There has also emerged the Internet of Everything (IoE) technology that combines IoT technology with big data processing technology through connection with cloud servers. To realize IoT, technology elements related to sensing, wired/wireless communication and network infrastructure, service interfacing, and security are needed, and technologies interconnecting things such as sensor networks, machine-to-machine (M2M) or machine type communication (MTC) are under research in recent years. In IoT environments, it is possible to provide intelligent information technology (IT) services, which collect and analyze data created by interconnected things to add new values to human life. Through convergence and combination between existing IT technologies and various industries, IoT technology may be applied to various areas such as smart homes, smart buildings, smart cities, smart or connected cars, smart grids, health-care, smart consumer electronics, and advanced medical services.

Accordingly, various attempts are being made to apply 5G communication systems to IoT networks. For example, technologies such as sensor networks and machine-to-machine (M2M) or machine type communication (MTC) are being realized by use of 5G communication technologies including beamforming, MIMO, and array antennas. Application of cloud RANs as a big data processing technique described above may be an instance of convergence of 5G technology and IoT technology.

With the advancement of wireless communication systems as described above, various services can be provided, and a method for smoothly providing these services is required accordingly.

**[Disclosure of Invention]**

**[Technical Problem]**

Based on the above-described discussion, the disclosure provides a method and apparatus for reducing energy consumption of a base station in a mobile communication system.

**[Solution to Problem]**

The invention of the disclosure to achieve the above object, a method performed by a base station in a communication system may include: transmitting information indicating base station energy saving mode to a terminal; identifying mode switching from normal mode to base station energy saving mode; and transmitting a downlink signal and receiving an uplink signal to and from the terminal according to base station energy saving mode, wherein the base station energy saving mode may include at least one of saving base station energy through control of downlink signal transmission of the base station, switching off antennas or power amplifiers of the base station, or adjusting one of a downlink transmission bandwidth or/and power spectral density of the base station.

In addition, a method performed by a terminal in a communication system may include: receiving information indicating base station energy saving mode from a base station; identifying a timing of mode switching from normal mode of the base station to base station energy saving mode; and transmitting an uplink signal and receiving a downlink signal to and from the base station according to base station energy saving mode, wherein the base station energy saving mode may include at least one of saving base station energy through control of downlink signal transmission of the base station, switching off antennas or power amplifiers of the base station, or adjusting one of a downlink transmission bandwidth or/and power spectral density of the base station.

In addition, a base station in a communication system may include: a transceiver; and a controller that is configured to control transmitting information indicating base station energy saving mode to a terminal, identifying mode switching from normal mode to base station energy saving mode, and transmitting a downlink signal and receiving an uplink signal to and from the terminal according to base station energy saving mode, wherein the base station energy saving mode may include at least one of saving base station energy through control of downlink signal transmission of the base station, switching off antennas or power amplifiers of the base station, or adjusting one of a downlink transmission bandwidth or/and power spectral density of the base station.

Further, a method performed by a terminal in a communication system may include: receiving information indicating base station energy saving mode from a base station; identifying a timing of mode switching from normal mode of the base station to base station energy saving mode; and transmitting an uplink signal and receiving a downlink signal to and from the base station according to base station energy saving mode, wherein the base station energy saving mode may include at least one of saving base station energy through control of downlink signal transmission of the base station, switching off antennas or power amplifiers of the base station, or adjusting one of a downlink transmission bandwidth or/and power spectral density of the base station.

**[Advantageous Effects of Invention]**

According to an embodiment of the disclosure, by defining a signal transmission method for a base station in a mobile communication system, the problem of excessive energy consumption can be solved and high energy efficiency can be achieved.

**[Brief Description of Drawings]**

FIG. 1 a diagram showing an example of the basic structure of a time-frequency resource region in a 5G system.
FIG. 2 is a diagram showing an example of a time domain mapping structure for synchronization signals and beam sweeping operation.
FIG. 3 is a diagram showing an example of a random access procedure.
FIG. 4 is a diagram showing an example of a procedure in which a UE reports UE capability information to a base station.
FIG. 5 is a diagram showing an example of the relationship between the base station transmission bandwidth and transmission power in base station normal mode.
FIG. 6 is a diagram showing an example of the relationship between the base station transmission bandwidth and transmission power in base station energy saving mode.
FIG. 7 is a diagram showing another example of the relationship between the base station transmission bandwidth and transmission power in base station energy saving mode.
FIG. 8 is a diagram showing another example of the relationship between the base station transmission bandwidth and transmission power in base station energy saving mode.
FIG. 9 is a diagram showing an example of switching between base station normal mode and base station energy saving mode.
FIG. 10A is a diagram showing an example of a downlink reception method and an uplink transmission method of a UE in response to switching from base station normal mode to base station energy saving mode.
FIG. 10B is a diagram showing an example of a downlink reception method and an uplink transmission method of a UE in response to switching from base station energy saving mode to base station normal mode.
FIG. 11A is a diagram showing an example of UE measurement reporting operation when the base station switches from base station normal mode to base station energy saving mode.
FIG. 11B is a diagram showing an example of UE measurement reporting operation when the base station switches from base station energy saving mode to base station normal mode.
FIG. 12 is a diagram showing an example of bandwidth adjustment operation of a UE in response to adjusting the base station transmission bandwidth.
FIG. 13 is a diagram showing an example of a procedure performed by a UE according to an embodiment of the disclosure.
FIG. 14 is a diagram showing an example of a procedure performed by a base station according to an embodiment of the disclosure.

FIG. 15 is a diagram showing an example of a UE transceiver according to an embodiment of the disclosure.

FIG. 16 is a block diagram showing an example of the structure of a UE according to an embodiment of the disclosure.

FIG. 17 is a block diagram showing an example of the structure of a base station according to an embodiment of the disclosure.

**[Mode for the Invention]**

Hereinafter, embodiments of the disclosure will be described in detail with reference to the accompanying drawings. In explaining the disclosure below, descriptions of well-known functions and structures incorporated herein may be omitted to avoid obscuring the subject matter of the disclosure. The terms described below are defined in consideration of their functions in the disclosure, and these may vary depending on the intention of the user, the operator, or the custom. Hence, their meanings should be determined based on the overall contents of this specification.

Advantages and features of the disclosure and methods for achieving them will be apparent from the following detailed description of embodiments taken in conjunction with the accompanying drawings. However, the disclosure is not limited to the embodiments disclosed below but may be implemented in various different ways, the embodiments are provided only to complete the disclosure and to fully inform the scope of the disclosure to those skilled in the art to which the disclosure pertains, and the disclosure is defined only by the scope of the claims. The same reference symbols are used throughout the specification to refer to the same parts.

Meanwhile, it will be appreciated that blocks of a flowchart and a combination of flowcharts may be executed by computer program instructions. These computer program instructions may be loaded on a processor of a general purpose computer, special purpose computer, or programmable data processing equipment, and the instructions executed by the processor of a computer or programmable data processing equipment create a means for carrying out functions described in blocks of the flowchart. To implement the functionality in a certain way, the computer program instructions may also be stored in a computer usable or readable memory that is applicable in a specialized computer or a programmable data processing equipment, and it is possible for the computer program instructions stored in a computer usable or readable memory to produce articles of manufacture that contain a means for carrying out functions described in blocks of the flowchart. As the computer program instructions may be loaded on a computer or a programmable data processing equipment, when the computer program instructions are executed as processes having a series of operations on a computer or a programmable data processing equipment, they may provide steps for executing functions described in blocks of the flowchart.

Additionally, each block of a flowchart may correspond to a module, a segment or a code containing one or more executable instructions for executing one or more logical functions, or to a part thereof. It should also be noted that functions described by blocks may be executed in an order different from the listed order in some alternative cases. For example, two blocks listed in sequence may be executed substantially at the same time or executed in reverse order according to the corresponding functionality.

Here, the word "unit", "module", or the like used in the embodiments may refer to a software component or a hardware component such as an FPGA or ASIC capable of carrying out a function or an operation. However, "unit" or the like is not limited to hardware or software. A unit or the like may be configured so as to reside in an addressable storage medium or to drive one or more processors. For example, units or the like may refer to components such as a software component, object-oriented software component, class component or task component, processes, functions, attributes, procedures, subroutines, program code segments, drivers, firmware, microcode, circuits, data, databases, data structures, tables, arrays, or variables. A function provided by a component and unit may be a combination of smaller components and units, and it may be combined with others to compose larger components and units. Further, components and units may be implemented to drive one or more CPUs in a device or a secure multimedia card. Also, in the embodiment, a unit or the like may include one or more processors.

In the following description of the disclosure, detailed descriptions of well-known functions and structures incorporated herein may be omitted to avoid obscuring the subject matter of the disclosure. Hereinafter, embodiments of the disclosure will be described with reference to the accompanying drawings.

Those terms used in the following description for identifying an access node, indicating a network entity, indicating a message, indicating an interface between network entities, and indicating various identification information are taken as illustration for ease of description. Accordingly, the disclosure is not limited by the terms to be described later, and other terms referring to objects having an equivalent technical meaning may be used.

In the following description, a physical channel or a signal may be used interchangeably with data or a control signal. For example, a physical downlink shared channel (PDSCH) is a term referring to a physical channel through which data is transmitted, but the PDSCH may also be used to refer to data. That is, in the disclosure, an expression "transmitting a physical channel" may be interpreted as being equivalent to an expression "transmitting data or a signal through a physical channel".

In the disclosure, higher signaling indicates a method of transmitting a signal from the base station to the UE by using a downlink data channel of the physical layer, or from the UE to the base station by using an uplink data channel of the physical layer. Higher signaling may be understood as radio resource control (RRC) signaling or medium access control (MAC) control element (CE).

For convenience of description below, the disclosure uses terms and names defined in the 3GPP NR (New Radio: 5th generation mobile communication standard) specification. However, the disclosure is not limited by the above terms and names, and may be equally applied to systems complying with other standards. Additionally, the term 'terminal' may refer to a mobile phone, smartphone, IoT equipment, sensor, as well as another wireless communication device.

In the following description, the base station (BS), as a main agent that allocates resources to a terminal, may be at least one of gNode B, gNB, eNode B, eNB, Node B, radio access unit, base station controller, or node on a network. The terminal may include, but not limited to, a user equipment (UE), a mobile station (MS), a cellular phone, a smartphone, a computer, or a multimedia system capable of performing a communication function.

To handle the recent explosive increase in mobile data traffic, the initial standard for the 5th generation (5G) system or new radio (NR) access technology, as the next-generation communication system after LTE (long term evolution or E-UTRA (evolved universal terrestrial radio access)) and LTE-A (LTE-advanced or E-UTRA evolution), has been completed. While existing mobile communication systems have focused on regular voice/data communication, the 5G systems aim to satisfy a variety of services and requirements such as high-speed broadband communication (enhanced mobile broadband, eMBB) services for improving existing voice/data communication, ultra-reliable and low latency communication (URLLC) services, and massive machine type communication (mMTC) services.

While the system transmission bandwidth per single carrier of existing LTE and LTE-A is limited to a maximum of 20 MHz, the 5G system mainly aims to provide ultra-high-speed data services reaching several Gbps by utilizing a much wider ultra-wide bandwidth. Hence, the 5G system is considering ultra-high frequency bands ranging from several GHz to up to 100 GHz, where it is relatively easy to secure ultra-wide bandwidth frequencies, as candidate frequencies. Additionally, through frequency reassignment or allocation, it is possible to secure wide bandwidth frequencies for the 5G system among the frequency bands belonging to a range from hundreds of MHz to several GHz used in existing mobile communication systems.

A radio wave of the ultra-high frequency band may be called a millimeter wave (mmWave) having a wavelength at the level of several millimeters. However, in the ultra-high frequency band, pathloss of the radio wave is increased in proportion to the frequency band, and thus the coverage of the mobile communication system is decreased.

To overcome the drawback of the coverage decrease in the ultra-high frequency band described above, beamforming technology is applied to increase the arrival distance of the radio wave by using multiple antennas to focus the radiant energy of radio waves to a specific destination point. That is, the beam width of the signal to which the beamforming technology is applied becomes relatively narrow, and radiant energy is concentrated within the narrowed beam width, thereby increasing the arrival distance of the radio wave. The beamforming technology may be applied respectively to the transmitting end and the receiving end. In addition to increasing the coverage, the beamforming technology has an effect of reducing interference in a region other than the beamforming direction. In order for the beamforming technology to operate properly, accurate transmit/receive beam measurement and feedback methods are required. The beamforming technology may be applied to control or data channels that correspond one-to-one between a given UE and base station. In addition, to increase the coverage, the beamforming technology may also be applied to control channels and data channels for transmitting common signals, such as a synchronization signal, broadcast channel (physical broadcast channel, PBCH) or system information, from the base station to multiple UEs in the system. In the case of applying beamforming technology to a common signal, a beam sweeping technology, which transmits a signal by changing the beam direction, may be additionally applied to ensure that the common signal can reach UEs located at arbitrary positions within the cell.

As another requirement for the 5G system, an ultra-low latency service with a transmission delay of approximately 1 ms between the transmitting and receiving ends is required. As a way to reduce transmission delay, it is necessary to design a frame structure based on a shorter transmission time interval (TTI) compared to LTE and LTE-A. The TTI is a basic time unit for performing scheduling, and the TTI of the existing LTE and LTE-A system is 1 ms corresponding to the length of one subframe. For example, a short TTI to satisfy the requirements for ultra-low delay services of the 5G system may be 0.5ms, 0.25ms, or 0.125ms, which is shorter than that of existing LTE and LTE-A systems.

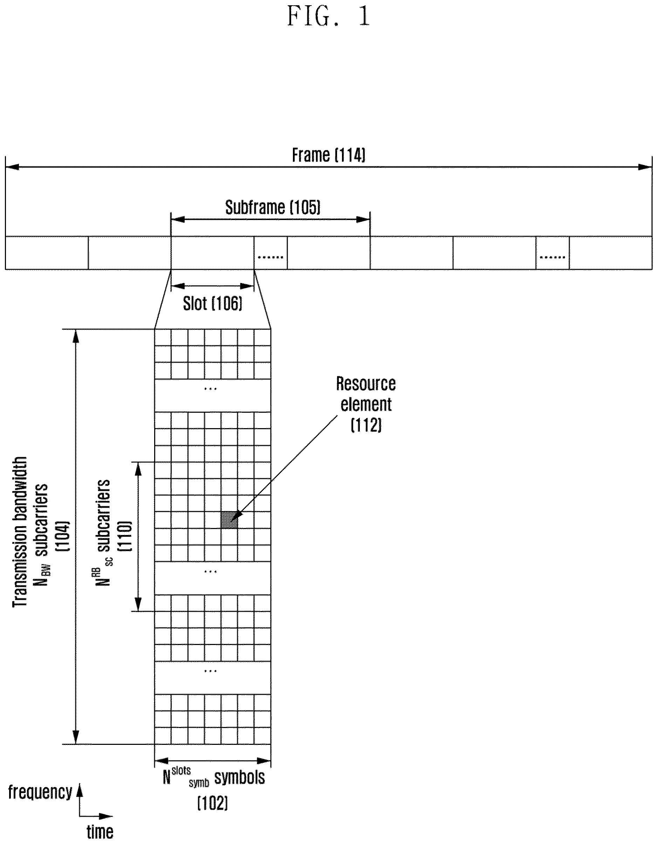

FIG. 1 a diagram showing an example of the basic structure of a time-frequency resource region in a 5G system. That is, FIG. 1 is a diagram showing the basic structure of a time-frequency resource region, which is a radio resource region where data or control channels of the 5G system are transmitted.

With reference to FIG. 1, in FIG. 1, the horizontal axis represents the time domain, and the vertical axis represents the frequency domain. The minimum transmission unit in the time domain of the 5G system is orthogonal frequency division multiplexing (OFDM) symbols, $N_{symb}^{slot}$ symbols 102 may collectively constitute one slot 106, and $N_{slot}^{subframe}$ slots may collectively constitute one subframe 105. The length of the subframe is 1.0ms, and 10 subframes may collectively constitute one frame 114 of 10ms. The minimum transmission unit in the frequency domain is a subcarrier, and the bandwidth of the entire system transmission band may be composed of a total of $N_{BW}$ subcarriers 104.

In the time-frequency domain, the basic unit of a resource is a resource element (RE) 112, and it may be indicated by an OFDM symbol index and a subcarrier index. A resource block (RB or physical resource block (PRB)) may be defined as $N_{sc}^{RB}$ consecutive subcarriers 110 in the frequency domain. In the 5G system, $N_{sc}^{RB} = 12$, and the data rate may increase in proportion to the number of RBs scheduled for the UE.

In the 5G system, the base station may map data on an RB basis and may generally perform scheduling on the RBs constituting one slot for a given UE. That is, the basic time unit for scheduling in the 5G system may be a slot, and the basic frequency unit for scheduling may be an RB.

The number of OFDM symbols $N_{symb}^{slot}$ may be determined according to the length of a cyclic prefix (CP) that is added for each symbol to prevent inter-symbol interference; for example, if a normal CP is applied, $N_{symb}^{slot} = 14$, whereas if an extended CP is applied, $N_{symb}^{slot} = 12$. Compared to the normal CP, the extended CP is applied to a system where the radio wave transmission distance is relatively long, so that orthogonality between symbols is maintained. In the case of a normal CP, the ratio between the CP length and the symbol length is maintained at a constant value, so that the overhead due to the CP can be maintained constant regardless of the subcarrier spacing. That is, if the subcarrier spacing is small, the symbol length becomes longer, and the CP length may also become longer accordingly. Conversely, if the subcarrier spacing is large, the symbol length becomes short, and the CP length may be reduced accordingly. The symbol length and CP length may be inversely proportional to the subcarrier spacing.

In the 5G system, various frame structures may be supported by adjusting the subcarrier spacing to satisfy various services and requirements. For example,

- From a perspective of the operating frequency band, the larger the subcarrier spacing, the more advantageous it is for phase noise recovery in the high frequency band.
- From a perspective of the transmission time, if the subcarrier spacing is large, the symbol length in the time domain is shortened, and as a result, the slot length is shortened, which is advantageous for supporting ultra-low latency services such as URLLC.
- From a perspective of the cell size, the longer the CP length, the larger cell can be supported, so the smaller the subcarrier spacing, the more relatively large cell can be supported. In mobile communication, the cell is a concept that refers to an area covered by one base station.

The subcarrier spacing and CP length are essential information for OFDM transmission and reception, smooth transmission and reception is possible only when the base station and the UE recognize the subcarrier spacing and CP length as common values. Table 1 shows the relationship between subcarrier spacing configuration ($\mu$), subcarrier spacing ($\Delta f$), and CP length supported by the 5G system.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 2 shows, in the case of normal CP, the number of symbols per slot ( $N_{symb}^{slot}$ ), the number of slots per frame ( $N_{slot}^{frame,\mu}$ ), and the number of slots per subframe ( $N_{slot}^{subframe,\mu}$ ) for each subcarrier spacing configuration ($\mu$).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 shows, in the case of extended CP, the number of symbols per slot ( $N_{symb}^{slot}$ ), the number of slots per frame ( $N_{slot}^{frame,\mu}$ ), and the number of slots per subframe ( $N_{slot}^{subframe,\mu}$ ) for each subcarrier spacing configuration ($\mu$).

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

It is expected that the 5G system will coexist with the existing LTE or/and LTE-A (LTE/LTE-A) system or will be operated in dual mode therewith at least at the beginning of introduction of the 5G system. Thereby, the existing LTE/LTE-A system may provide stable system operation to the UE, and the 5G system may provide improved services to the UE. Hence, the frame structure of the 5G system needs to include at least the frame structure or essential parameter set (subcarrier spacing = 15kHz) of LTE/LTE-A.

For example, when comparing a frame structure with subcarrier spacing configuration $\mu$=0 (hereinafter referred to as frame structure A) and a frame structure with subcarrier spacing configuration $\mu$=1 (hereinafter referred to as frame structure B), frame structure B corresponds to a case where the subcarrier spacing and RB size are doubled, and the slot length and symbol length are reduced by half in comparison to frame structure A. In the case of frame structure B, two slots may constitute one subframe, and 20 subframes may constitute one frame.

If the frame structure of the 5G system is generalized, where the subcarrier spacing, CP length, and slot length belong to the essential parameter set, an integer multiple relationship may be established between the subcarrier spacing, CP length, and slot length of one frame structure and those of another frame structure, so that high scalability can be provided. Further, to represent a reference time unit independent of the frame structure, a subframe with a fixed length of 1 ms may be defined.

The frame structure may be applied in correspondence to various scenarios. From a perspective of the cell size, the longer the CP length, the larger cell can be supported, so frame structure A can support relatively larger cells compared to frame structure B. From a perspective of the operating frequency band, the larger the subcarrier spacing, the more advantageous it is to recover phase noise in the high frequency band, so frame structure B can support a relatively higher operating frequency compared to frame structure A. From a service perspective, it is advantageous to have a shorter slot length, which is the basic time unit for scheduling, to support ultra-low-latency services such as URLLC, so frame structure B may be relatively more suitable for URLLC services compared to frame structure A.

In the following description of the disclosure, uplink (UL) may refer to a radio link through which a UE transmits data or control signals to a base station, and downlink (DL) may refer to a radio link through which a base station transmits data or control signals to a UE.

In an initial access stage in which a UE initially accesses the system, the UE may first set downlink time and frequency synchronization from a synchronization signal transmitted by the base station through cell search, and obtain a cell identity (cell ID). Then, the UE may receive a PBCH by using the obtained cell ID and obtain a master information block (MIB) being essential system information from the PBCH. Additionally, the UE may receive system information (system information block, SIB) transmitted by the base station to obtain cell-common control information related to transmission and reception. The cell-common control information related to transmission and reception may include random access-related control information, paging-related control information, and common control information about various physical channels.

The synchronization signal may be a reference signal for cell search, and the subcarrier spacing may be applied for each frequency band in a manner suitable to the channel environment such as phase noise. In the case of a data channel or control channel, the subcarrier spacing may be applied differently according to the service type so as to support various services as described above.

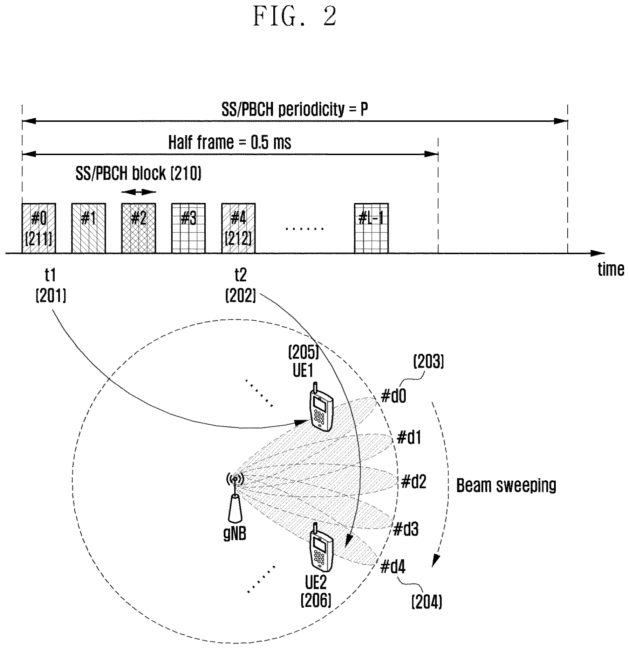

FIG. 2 is a diagram showing an example of a time domain mapping structure for synchronization signals and beam sweeping operation.

For description, the following constituents may be defined

- PSS (primary synchronization signal): a signal that serves as a reference for DL time/frequency synchronization and provides some information about the cell ID.
- SSS (secondary synchronization signal): it serves as a reference for DL time/frequency synchronization and provides the remaining information about the cell ID. Additionally, it may serve as a reference signal for PBCH demodulation.
- PBCH: it provides MIB, which is essential system information required for transmission and reception of data channels and control channels of the UE. The essential system information may include control information about a search space indicating radio resource mapping information of a control channel, scheduling control information for a separate data channel transmitting system information, and information about the system frame number (SFN) being a frame-based index serving as a timing reference.
- SS/PBCH block (synchronization signal/PBCH block or SSB) 210: an SS/PBCH block is composed of N OFDM symbols and is made up of a combination of PSS, SSS, PBCH, or the other. In the case of a system where beam sweeping technology is applied, the SS/PBCH block is the minimum unit to which beam sweeping is applied. In a 5G system, the value of N may be 4. The base station may transmit up to L SS/PBCH blocks, and the L SS/PBCH blocks are mapped within a half frame (0.5ms). Additionally, the L SS/PBCH blocks are periodically repeated with a specific periodicity P. The periodicity P may be notified to the UE by the base station through signaling. If there is no separate signaling for the periodicity P, the UE applies a pre-agreed default value.

With reference to FIG. 2, FIG. 2 shows an example in which beam sweeping is applied over time on a SS/PBCH block basis. In the example of FIG. 2, UE 1 (205) uses a beam radiated in direction #d0 (203) by beamforming applied to SS/PBCH block #0 (211) at time t1 (201) to receive a SS/PBCH block. And, UE 2 (206) uses a beam radiated in direction #d4 (204) by beamforming applied to SS/PBCH block #4 (212) at time t2 (202) to receive a SS/PBCH block. A UE may obtain an optimal synchronization signal through a beam radiated by the base station in a direction where the UE is located. For example, it may be difficult for UE 1 (205) to obtain time/frequency synchronization and essential system information from a SS/PBCH block delivered through a beam radiated in direction #d4, which is far from the position of UE 1.

In addition to the initial access procedure, the UE may also receive an SS/PBCH block to determine whether the radio link quality of the current cell is maintained above a specific level. Additionally, in a handover procedure in which the UE moves from the current cell to a neighbor cell, the UE may receive an S S/PBCH block of the neighbor cell to determine the radio link quality of the neighbor cell and obtain time/frequency synchronization of the neighbor cell.

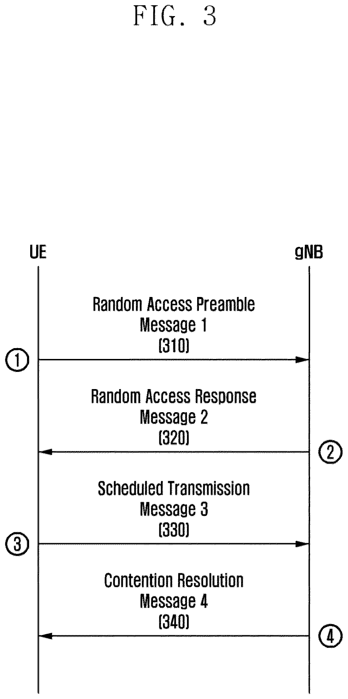

After the UE obtains the MIB and system information from the base station through the initial access procedure, the UE may perform a random access procedure to switch the link with the base station to the connected state (or, RRC_CONNECTED state). When the random access procedure is completed, the UE switches to the connected state, and one-to-one communication is possible between the base station and the UE. Next, the random access procedure will be described in detail with reference to FIG. 3.

FIG. 3 is a diagram showing an example of a random access procedure.

With reference to FIG. 3, at first step 310 of the random access procedure, the UE transmits a random access preamble to the base station. The random access preamble, which is the first message transmitted by the UE in the random access procedure, may be referred to as message 1. Based on the random access preamble, the base station may measure a transmission delay value between the UE and the base station and achieve uplink synchronization. Here, the UE may randomly select a random access preamble to be used from a random access preamble set given in advance by system information. Additionally, the initial transmission power for the random access preamble may be determined according to the pathloss between the base station and the UE measured by the UE. Further, the UE may determine the transmit beam direction for the random access preamble based on the synchronization signal received from the base station and transmit the random access preamble.

At second step 320, the base station transmits a random access response (RAR, or message 2) including an uplink transmission timing control command to the UE based on a transmission delay value measured from the random access preamble received at first step 310. Additionally, the RAR may include, as scheduling information for message 3, information about uplink resources to be used by the UE, power control command, and control information about an uplink transmit beam of the UE.

If the UE fails to receive the RAR from the base station within a specified time at second step 320, it may perform the first step 310 again. If the first step 310 is performed again, the UE may transmit the random access preamble with a transmission power increased by a specific step (power ramping) to thereby increase the probability for the base station to receive the random access preamble.

At third step 330, the UE transmits uplink data (message 3) including its UE ID to the base station by using the uplink resources allocated at second step 320 over an uplink data channel (physical uplink shared channel, PUSCH). The transmission timing of the uplink data channel for transmitting message 3 may follow the transmission timing control command received from the base station at second step 320. Additionally, the transmission power of the uplink data channel for transmitting message 3 may be determined in consideration of the power control command received from the base station at second step 320 and the power ramping value of the random access preamble. The uplink data channel for transmitting message 3 may refer to the first uplink data signal transmitted by the UE to the base station after UE's transmission of the random access preamble.

At fourth step 340, upon determining that the UE has performed random access without collision with other UEs, the base station transmits data (message 4) including the ID of the UE having transmitted the uplink data at third step 330 to the corresponding UE. If the UE receives the signal transmitted by the base station at fourth step 340, it may determine that the random access is successful. Then, the UE may transmit HARQ-ACK information indicating successful or unsuccessful reception of message 4 to the base station over an uplink control channel (physical uplink control channel, PUCCH).

If the data transmitted by the UE at third step 330 collides with data of another UE and the base station fails to receive the data signal from the UE, the base station may no longer transmit data to the UE. As a result, if the UE fails to receive data transmitted from the base station at fourth step 340 within a given time, the UE may determine that the random access procedure has failed and may start the procedure again from the first step 310.

If the random access procedure is successfully completed, the UE switches to the connected state, and one-to-one communication becomes possible between the base station and the UE. The base station may receive UE capability information from a UE in connected state and adjust scheduling in consideration of the UE capability information of the corresponding UE. Through the UE capability information, the UE may notify the base station of whether the UE itself supports a specific function, the maximum allowable value for a function supported by the UE, and the other. Hence, the UE capability information reported by each UE to the base station may have different values for individual UEs.

For example, the UE may report UE capability information including at least a portion of the following control information to the base station as the above UE capability information.

- Control information about the frequency bands supported by the UE
- Control information about the channel bandwidth supported by the UE
- Control information about the maximum modulation scheme supported by the UE
- Control information about the maximum number of beams supported by the UE
- Control information about the maximum number of layers supported by the UE
- Control information about CSI reporting supported by the UE
- Control information about whether frequency hopping is supported by the UE
- Control information about bandwidths in the case of supporting carrier aggregation (CA)
- Control information about whether cross carrier scheduling is supported in the case of supporting carrier aggregation

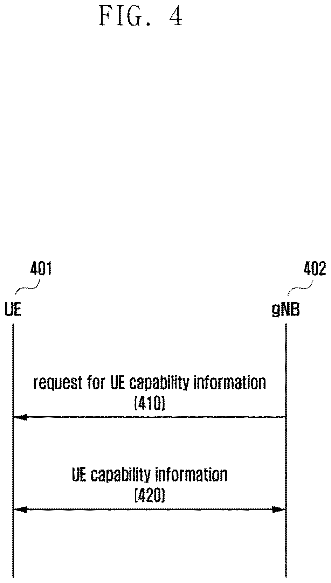

FIG. 4 is a diagram showing an example of a procedure in which the UE reports UE capability information to the base station.

With reference to FIG. 4, at step 410, the base station 402 may transmit a request message for UE capability information to the UE 401. In response to the request for UE capability information from the base station, at step 420, the UE transmits UE capability information to the base station.

Next, a description will be given of a scheduling method in which the base station transmits downlink data to the UE or instructs the UE to transmit uplink data.

Downlink control information (DCI) is control information transmitted by the base station transmits to a UE through downlink, and may include downlink data scheduling information or uplink data scheduling information for a given terminal. In general, the base station may independently perform channel coding on the DCI for each terminal and then transmit it to the corresponding UE through the physical downlink control channel (PDCCH), which is a downlink physical control channel.

The base station may apply and operate preset DCI formats for the UE to be scheduled according to the purposes such as whether the DCI is scheduling information for downlink data (downlink assignment), whether the DCI is scheduling information for uplink data (uplink grant), or whether the DCI is for power control.

The base station may transmit downlink data to the UE through the physical downlink shared channel (PDSCH) being a physical channel for downlink data transmission. Scheduling information such as specific mapping position of the PDSCH in the time-frequency domain, modulation scheme, HARQ-related control information, and power control information may be notified to the UE by the base station through the DCI related to downlink data scheduling information among DCIs transmitted through the PDCCH.

The UE may transmit uplink data to the base station through the physical uplink shared channel (PUSCH) being a physical channel for uplink data transmission. Scheduling information such as specific mapping position of the PUSCH in the time-frequency domain, modulation scheme, HARQ-related control information, and power control information may be notified to the UE by the base station through the DCI related to uplink data scheduling information among DCIs transmitted through the PDCCH.

The time-frequency resource to which the PDCCH is mapped is called a control resource set (CORESET). In the frequency domain, the CORESET may be configured on all or part of the frequency resources of the bandwidth supported by the UE. In the time domain, the CORESET may be configured on one or multiple OFDM symbols, and this may be defined as the CORESET length (control resource set duration). The base station may configure one or multiple CORESETs to the UE through higher layer signaling (e.g., system information, MIB, or RRC signaling). Configuring a CORESET to the UE may mean providing information such as CORESET ID (identity), frequency position of the CORESET, and symbol length of the CORESET. The information provided by the base station to the UE to configure a CORESET may include at least some of the information included in Table 4.

[Table 4]

```
ControlResourceSet ::= SEQUENCE {

controlResourceSetId ControlResourceSetId,


frequencyDomainResources BIT STRING (SIZE (45)),


        duration INTEGER (1..maxCoReSetDuration),


cce-REG-MappingType CHOICE {


interleaved SEQUENCE {
reg-BundleSize ENUMERATED {n2, n3, n6},


                interleaverSize ENUMERATED {n2, n3, n6},


                shiftIndex
INTEGER(0..maxNrofPhysicalResourceBlocks-1) OPTIONAL -- Need
S


},
nonInterleaved NULL
},
precoderGranularity ENUMERATED {sameAsREG-bundle,
allContiguousRBs},


        tci-StatesPDCCH-ToAddList SEQUENCE(SIZE
(1..maxNrofTCI-StatesPDCCH)) OF TCI-StateId OPTIONAL, -- Cond
NotSIB1-initialBWP


tci-StatesPDCCH-ToReleaseList SEQUENCE(SIZE (1..maxNrofTCI-
StatesPDCCH)) OF TCI-StateId OPTIONAL, -- Cond NotSIB1-
```

```
initialBWP

tci-PresentInDCI ENUMERATED {enabled} OPTIONAL, -- Need S

pdcch-DMRS-ScramblingID INTEGER (0..65535) OPTIONAL, -- Need
S

}
```

The CORESET may be composed of $N_{RB}^{CORESET}$ RBs in the frequency domain and may be composed of $N_{RB}^{CORESET} \in \{1,2,3\}$ symbols in the time domain. The NR PDCCH may be composed of one or multiple control channel elements (CCEs). One CCE may be composed of 6 resource element groups (REGs), and one REG may be defined as 1 RB and 1 OFDM symbol duration. In a CORESET, REGs may be indexed in a time-first manner starting at REG index 0 for the first OFDM symbol and the lowest-numbered RB in the CORESET.

As a PDCCH transmission method, an interleaved method and a non-interleaved method may be supported. The base station may configure the UE with whether to use interleaved or non-interleaved transmission for each CORESET through higher layer signaling. Interleaving may be performed on a REG bundle basis. A REG bundle can be defined as a set of one or multiple REGs. The UE may determine the CCE-to-REG mapping scheme in the corresponding CORESET in a manner as shown in Table 5 below based on the interleaved or non-interleaved transmission configured by the base station.

[Table 5]

| |
|---|
| The CCE-to-REG mapping for a control-resource set can be interleaved or non-interleaved and is described by REG bundles:<br><br> - REG bundle $i$ is defined as REGs $\{iL, iL+1,...,iL+L-1\}$ where $L$ is the REG bundle size, $i = 0,1,...,N_{REG}^{CORESET}/L - 1$, and $N_{REG}^{CORESET} = N_{RB}^{CORESET}N_{symb}^{CORESET}$ is the number of REGs in the CORESET<br> - CCE $j$ consists of REG bundles $\{f(6j/L), f(6j/L+1),...,f(6j/L+6/L-1)\}$ where $f(\cdot)$ is an interleaver<br><br>For non-interleaved CCE-to-REG mapping, $L = 6$ and $f(x) = x$.<br><br>For interleaved CCE-to-REG mapping, $L \in \{2,6\}$ for $N_{symb}^{CORESET} = 1$ and $L \in \{N_{symb}^{CORESET}, 6\}$ for $N_{symb}^{CORESET} \in \{2,3\}$. The interleaver is defined by<br><br>$$f(x) = (rC + c + n_{shift}) \bmod (N_{REG}^{CORESET}/L)$$<br>$$x = cR + r$$<br>$$r = 0,1,...,R-1$$<br>$$c = 0,1,...,C-1$$<br>$$C = N_{REG}^{CORESET}/(LR)$$ |

The base station may notify, via signaling, the UE of configuration information such as symbols to which the PDCCH is mapped in a slot, a transmission periodicity, or the other.

The search space for the PDCCH may be described as follows. The number of CCEs required to transmit a PDCCH may be 1, 2, 4, 8, or 16 depending on the aggregation level (AL), and a different number of CCEs may be used for link adaptation of a downlink control channel. For example, when AL=L, one downlink control channel may be transmitted by using L CCEs. The UE performs blind decoding for detecting a signal in a state where it does not know information about the downlink control channel, and a search space representing a set of CCEs may be defined for this. The search space is a set of downlink control channel candidates composed of CCEs that the UE should attempt to decode at a given aggregation level, and since there are various aggregation levels that make bundles of 1, 2, 4, 8 and 16 CCEs, respectively, the UE may have multiple search spaces. A search space set may be defined as a set of search spaces at all configured aggregation levels.

The search spaces may be classified into a common search space (CSS) and a UE-specific search space (USS). A specific group of UEs or all UEs may examine the common search space of a PDCCH to receive cell-common control information such as dynamic scheduling of system information or a paging message. For example, the UE may receive scheduling assignment information of the PDSCH for receiving system information by examining the common search space of the PDCCH. Since a specific group of UEs or all UEs need to receive the PDCCH, the common search space may be defined as a set of pre-agreed CCEs.

The UE may receive scheduling assignment information for a UE-specific PDSCH or PUSCH by examining the UE-specific search space of a PDCCH. The UE-specific search space may be defined in a UE-specific manner as a function of the UE ID and various system parameters.

The base station may configure configuration information about the search space of the PDCCH to the UE through higher layer signaling (e.g., SIB, MIB, RRC signaling). For example, the base station may configure the UE with the number of PDCCH candidates at each aggregation level L, a monitoring periodicity for a search space, monitoring occasions in symbols within a slot for the search space, a search space type (common search space or UE-specific search space), a combination of DCI format and RNTI to be monitored in the corresponding search space, and an index of a CORESET in which the search space is to be monitored. For example, parameters for the search space for the PDCCH may include the pieces of information as shown in Table 6 below.

[Table 6]

```
SearchSpace ::= SEQUENCE {
searchSpaceId SearchSpaceId,
controlResourceSetId ControlResourceSetId OPTIONAL, -- Cond SetupOnly

 monitoringSlotPeriodicityAndOffset CHOICE {

 s11 NULL,
 s12 INTEGER (0..1),
 s14 INTEGER (0..3),
 s15 INTEGER (0..4),
 s18 INTEGER (0..7),
 s110 INTEGER (0..9),
 s116 INTEGER (0..15),
 s120 INTEGER (0..19),
 s140 INTEGER (0..39),
 s180 INTEGER (0..79),
 s1160 INTEGER (0..159),
 s1320 INTEGER (0..319),
```

```
sl640 INTEGER (0..639),
sl1280 INTEGER (0..1279),
sl2560 INTEGER (0..2559)
} OPTIONAL, -- Cond Setup
duration   INTEGER (2..2559) OPTIONAL, -- Need R

monitoringSymbolsWithinSlot BIT STRING (SIZE (14)) OPTIONAL, -- Cond
Setup

nrofCandidates SEQUENCE {

aggregationLevel1 ENUMERATED {n0, n1, n2, n3, n4, n5, n6, n8},
aggregationLevel2 ENUMERATED {n0, n1, n2, n3, n4, n5, n6, n8},
aggregationLevel4 ENUMERATED {n0, n1, n2, n3, n4, n5, n6, n8},
aggregationLevel8 ENUMERATED {n0, n1, n2, n3, n4, n5, n6, n8},
aggregationLevel16 ENUMERATED {n0, n1, n2, n3, n4, n5, n6, n8}
} OPTIONAL, -- Cond Setup
searchSpaceType CHOICE {

common   SEQUENCE {

dci-Format0-0-AndFormat1-0 SEQUENCE {
...
} OPTIONAL, -- Need R
dci-Format2-0 SEQUENCE {
nrofCandidates-SFI SEQUENCE {
aggregationLevel1 ENUMERATED {n1, n2} OPTIONAL, -- Need R
aggregationLevel2 ENUMERATED {n1, n2} OPTIONAL, -- Need R
aggregationLevel4 ENUMERATED {n1, n2} OPTIONAL, -- Need R
aggregationLevel8 ENUMERATED {n1, n2} OPTIONAL, -- Need R
aggregationLevel16 ENUMERATED {n1, n2} OPTIONAL -- Need R
},
...
}   OPTIONAL, -- Need R
dci-Format2-1 SEQUENCE {
...
}    OPTIONAL, -- Need R
dci-Format2-2 SEQUENCE {
...
} OPTIONAL, -- Need R
dci-Format2-3 SEQUENCE {
dummy1 ENUMERATED {sl1, sl2, sl4, sl5, sl8, sl10, sl16, sl20}
OPTIONAL, -- Cond Setup
dummy2 ENUMERATED {n1, n2},
...
} OPTIONAL -- Need R
```

```
},
ue-Specific SEQUENCE {

dci-Formats ENUMERATED {formats0-0-And-1-0, formats0-1-And-1-1},
...,

}
} OPTIONAL -- Cond Setup2
}
```

The base station may configure the UE with one or plural search space sets according to the configuration information. According to some embodiments, the base station may configure the UE with search space set 1 and search space set 2. In search space set 1, the UE may be configured to monitor DCI format A scrambled with X-RNTI in the common search space, and in search space set 2, the UE may be configured to monitor DCI format B scrambled with Y-RNTI in the UE-specific search space.

According to the configuration information, one or plural search space sets may be present in the common search space or UE-specific search space. For example, search space set #1 and search space set #2 may be configured as a common search space, and search space set #3 and search space set #4 may be configured as a UE-specific search space.

In the common search space, the UE may monitor, but not limited to, the following combinations of DCI format and RNTI.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the UE may monitor, but not limited to, the following combinations of DCI format and RNTI.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The above RNTIs may comply with the following definitions and uses.

Cell RNTI (C-RNTI): used for scheduling UE-specific PDSCH or PUSCH
Temporary cell RNTI (TC-RNTI): used for scheduling UE-specific PDSCH
Configured scheduling RNTI (CS-RNTI): used for scheduling semi-statically configured UE-specific PDSCH
Random access RNTI (RA-RANTI): used for scheduling PDSCH at random access stage
Paging RNTI (P-RNTI): used for scheduling a PDSCH on which paging is transferred
System information RNTI (SI-RNTI): used for scheduling a PDSCH on which system information is transferred
Interruption RNTI (INT-RNTI): used for notifying whether to puncture a PDSCH
Transmit power control for PUSCH RNTI (TPC-PUSCH-RNTI): used for indicating a power control command for PUSCH
Transmit power Control for PUCCH RNTI (TPC-PUCCH-RNTI): used for indicating a power control command for PUCCH
Transmit power control for SRS RNTI (TPC-SRS-RNTI): for indicating a power control command for SRS

The DCI formats described above may follow the definitions shown in Table 7 below.

[Table 7]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In CORESET p and search space set s, the search space at aggregation level L may be expressed as the following equation.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{p,s,max}^{(L)}} \right\rfloor + n_{CI} \right) \mod \left\lfloor N_{CCE,p}/L \right\rfloor \right\} + i$$

- L: aggregation level
- $n_{CI}$: carrier index
- $N_{CCE,p}$: total number of CCEs in CORESET p
- $n_{s,f}^{\mu}$: slot index
- $M_{p,s,max}^{(L)}$: number of PDCCH candidates at aggregation level L
- $m_{s,n_{CI}} = 0, ..., M_{p,s,max}^{(L)}$ -1: indexes of PDCCH candidates at aggregation level L
- i = 0, ..., L-1
-

$$Y_{p,n_{s,f}^{\mu}} = (A_p \cdot Y_{p,n_{s,f}^{\mu}-1}) \mod D$$,

$Y_{p,-1} = n_{RNTI} \neq 0$ , $A_0 = 39827$, $A_1 = 39829$, $A_2 = 39839$, D = 65537
- $n_{RNTI}$ : UE ID

For the common search space, the value of

$$Y_{p,n_{s,f}^{\mu}}$$

may correspond to 0.

For the UE-specific search space, the value of

$$Y_{p,n_{s,f}^{\mu}}$$

may correspond to a value that changes depending on the UE ID (ID set to the UE by C-RNTI or base station) and time index.

As described above, to achieve ultra-high-speed data services reaching several Gbps in a 5G system, transmission and reception of a signal with an ultra-wide bandwidth of tens to hundreds of MHz or several GHz may be supported. Transmission and reception of an ultra-wide bandwidth signal may be supported through a single component carrier (CC), or may be supported through CA technology that combines multiple component carriers. In case that a mobile network operator fails to secure a frequency with a bandwidth sufficient to provide an ultra-high-speed data service as a single component carrier, CA technology is a technology that increases the total frequency bandwidth by combining individual component carriers with a relatively small bandwidth and consequently enables the ultra-high-speed data service.

As another way to support ultra-high-speed data services, the data rate can be increased through spatial multiplexing using multiple transmit and receive antennas. In general, the number of power amplifiers (PA) required increases in proportion to the number of transmit antennas provided in the base station or UE. The maximum output of the base station and UE depends on the power amplifier characteristics, and in general, the maximum output of the base station depends on the size of the cell covered by the base station. Usually, the maximum output is expressed in dBm. The maximum output of the UE is usually 23dBm or 26dBm.

As an example of a commercial 5G base station, the base station may be equipped with 64 transmit antennas and corresponding 64 power amplifiers and may operate with a bandwidth of 100 MHz in a frequency band of 3.5 GHz. Consequently, the energy consumption of the base station increases in proportion to the output of the power amplifiers and the operation time of the power amplifiers. Compared to an LTE base stations, the 5G base station operating in a relatively high frequency band is characterized by a wider bandwidth and many transmit antennas. While these features have the effect of increasing the data rate, they incur the cost of increased base station energy consumption. Hence, the more base stations constituting a mobile communication network, the greater the energy consumption of the entire mobile communication network in proportion thereto.

As described above, the energy consumption of a base station is greatly influenced by the operation of the power amplifiers. Since the power amplifiers are involved in the base station transmission operation, the downlink (DL) transmission operation of the base station is highly related to the base station's energy consumption. Relatively, the uplink (UL) reception operation of the base station does not account for a large portion of the base station's energy consumption. The physical channel and physical signal transmitted by the base station in the downlink are as follows.

- PDSCH: Downlink data channel including data to be transmitted to one or multiple UEs
- PDCCH: Downlink control channel including scheduling information for PDSCH and PUSCH. Or, the PDCCH alone may transmit control information such as slot format or power control command, without the PDSCH or PUSCH to be scheduled. This scheduling information includes information about resources to which PDSCH or PUSCH is mapped, HARQ-related information, power control information, or the other.
- PBCH: Downlink broadcast channel that provides the MIB being essential system information required for transmission and reception of data channels and control channels of the UE.
- PSS: Signal that serves as a reference for DL time/frequency synchronization and provides some information about the cell ID.
- SSS: Signal that serves as a reference for DL time and/or frequency (hereinafter referred to as time/frequency) synchronization and provides the remaining information about the cell ID.
- DM-RS (demodulation reference signal): Reference signal for UE channel estimation respectively for PDSCH, PDCCH, and PBCH
- CSI-RS (channel-state information reference signal): Downlink signal that serves as a reference for measuring the downlink channel state of the UE.
- PT-RS (phase-tracking reference signal): Downlink signal for phase tracking

From a perspective of base station energy saving, if the base station stops downlink transmission operation, the base station energy saving effect may be increased due to the resulting stoppage of power amplifier operation. The operation of not only the power amplifiers but also the remaining base station equipment such as baseband components is reduced, enabling additional energy savings. Similarly, although the uplink reception operation accounts for a relatively small portion of the total energy consumption of the base station, additional energy savings may be achieved if the uplink reception operation can be stopped.

The downlink transmission operation of the base station basically depends on the amount of downlink traffic. For example, if there is no data to be transmitted to the UE in the downlink, the base station does not need to transmit the PDSCH and the PDCCH for scheduling the PDSCH. Or, if transmission can be postponed for a while for reasons such as the data is not sensitive to transmission delay, the base station may not transmit the PDSCH or/and PDCCH. For convenience of description below, this method of reducing base station energy consumption by not performing PDSCH and/or PDCCH transmission in relation to data traffic or appropriately adjusting it is referred to as "base station energy saving method 1-1".

On the other hand, physical channels and physical signals such as PSS, SSS, PBCH, and CSI-RS have the characteristic of being transmitted repeatedly according to an agreed periodicity regardless of data transmission to the UE. Hence, even if the UE does not receive data, it may continuously update downlink time/frequency synchronization, downlink channel status, radio link quality, or the other. That is, the PSS, SSS, PBCH, and CSI-RS necessarily require downlink transmission regardless of downlink data traffic, resulting in base station energy consumption. Accordingly, base station energy savings may be achieved by adjusting transmission of the above signals unrelated (or less relevant) to data traffic to occur less frequently (hereinafter referred to as "base station energy saving method 1-2").

The energy saving effect of the base station may be maximized by stopping or minimizing the operation of the base station's power amplifiers and the operation of related radio frequency (RF) components and baseband components during the time period when the base station does not perform downlink transmission due to "base station energy saving method 1-1" or "base station energy saving method 1-2".

As another method, the energy consumption of the base station may be reduced by switching off some of the antennas or power amplifiers of the base station (hereinafter referred to as "base station energy saving method 2"). In this case, as a reaction to the energy saving effect of the base station, adverse effects such as a decrease in cell coverage or a decrease in throughput may occur. For example, in a base station equipped with 64 transmit antennas and corresponding 64 power amplifiers and operating with a 100 MHz bandwidth in the 3.5 GHz frequency band as described above, if the base station activates only 4 transmit antennas and 4 power amplifiers and switches off the rest for a specific time period for energy savings, the base station energy consumption will be reduced to approximately 1/16 (=4/64) during this time period, but due to the decrease in maximum transmission power and beamforming gain, it becomes difficult to achieve cell coverage and throughput of the case of assuming 64 antennas and 64 power amplifiers.

Hereinafter, a description will be given of base station energy saving methods proposed in the disclosure through specific embodiments.

<FirstEmbodiment>

The first embodiment describes a method that adaptively adjusts the transmission bandwidth and transmission power of the base station to save energy. For convenience of description, this is referred to as "base station energy saving method 3".

In the following description, for a distinction from normal base station operation, the base station state in which operation for base station energy savings is applied is referred to as base station energy saving mode (ES mode), and the base station state in which normal base station operation is applied is referred to as base station normal mode (normal mode).

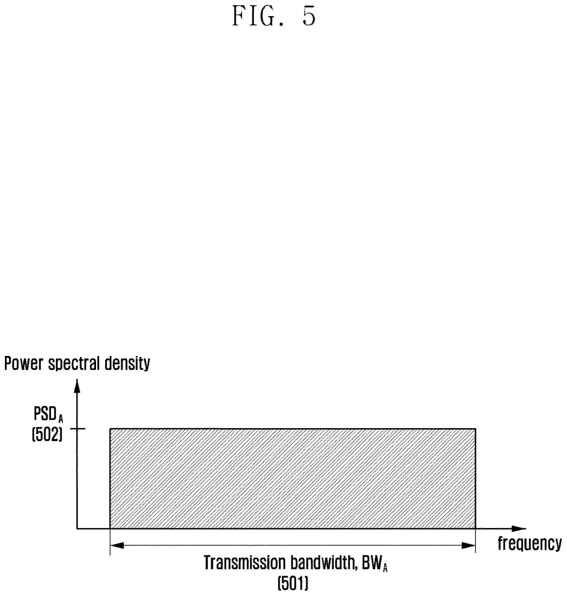

FIG. 5 is a diagram showing an example of the relationship between the base station transmission bandwidth and transmission power in base station normal mode. Commonly in FIGS. 5 to 8, the horizontal axis represents the size of the base station transmission bandwidth in the frequency domain, and the vertical axis represents the power spectral density (PSD). The unit of PSD is usually expressed as Watt/Hz, which means power per unit bandwidth. Transmission bandwidth refers to the bandwidth occupied by the signal transmitted by the base station, and may be expressed in MHz.

With reference to FIG. 5, it is shown that in base station normal mode, the transmission bandwidth is equal to $BW_A$ (501) and the PSD is equal to $PSD_A$ (502). Hence, the total transmission power used by the base station is $BW_A \times PSD_A$. If the base station operates in normal mode for time T, the total energy consumption of the base station is $BW_A \times PSD_A \times T$.

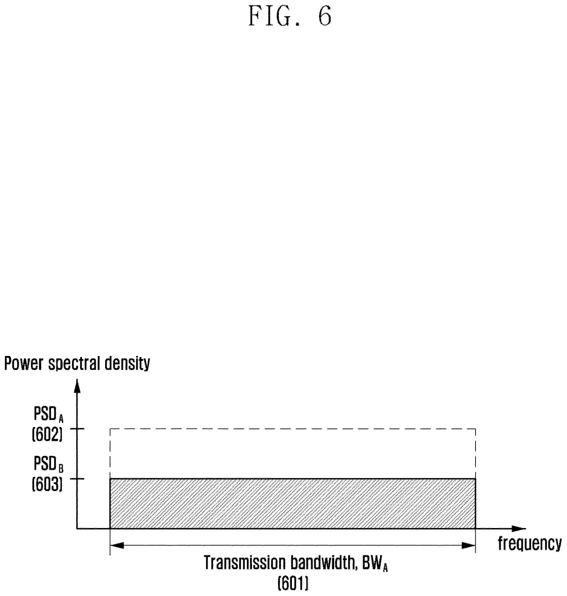

FIG. 6 is a diagram showing an example of the relationship between the base station transmission bandwidth and transmission power in base station energy saving mode (hereinafter referred to as "base station ES mode 1") in which operations for base station energy savings are applied.

According to FIG. 6, an example is shown in which the base station operates in a state where the transmission bandwidth is maintained at $BW_A$ (601) as in base station normal mode but the PSD is reduced from $PSD_A$ (602) to $PSD_B$ (603). Hence, the total transmission power used by the base station is $BW_A \times PSD_B$. If the base station operates in energy saving mode for time T, the total energy consumption of the base station becomes $BW_A \times PSD_B \times T$, resulting in an energy saving gain compared to base station normal mode. "Base station ES mode 1" has the feature of being able to use the same base station transmission bandwidth as base station normal mode, thus maintaining the same cell capacity as base station normal mode. However, as the PSD is reduced, a corresponding decrease in cell coverage and throughput may be expected.

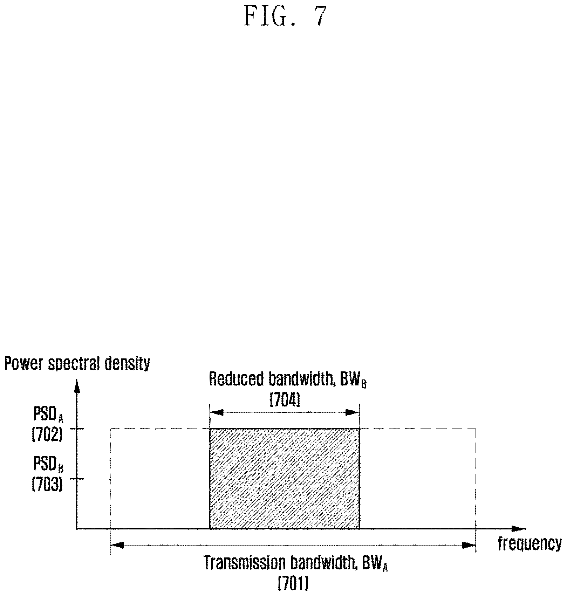

FIG. 7 is a diagram showing another example of the relationship between the base station transmission bandwidth and transmission power in base station energy saving mode (hereinafter referred to as "base station ES mode 2") in which operations for base station energy savings are applied. According to FIG. 7, an example is shown in which the base station operates in a state where the transmission bandwidth is reduced from $BW_A$ (701) of base station normal mode to $BW_B$ (704) but the PSD is maintained at $PSD_A$ (702) as in base station normal mode. Hence, the total transmission power used by the base station is $BW_B \times PSD_A$. If the base station operates in energy saving mode for time T, the total energy consumption of the base station becomes $BW_B \times PSD_A \times T$, resulting in an energy saving gain compared to base station normal mode. "Base station ES mode 2" has the feature of being able to use the same PSD as base station normal mode, thus maintaining the same cell coverage as base station normal mode. However, as the base station transmission bandwidth is reduced, a corresponding decrease in cell capacity and throughput may be expected.

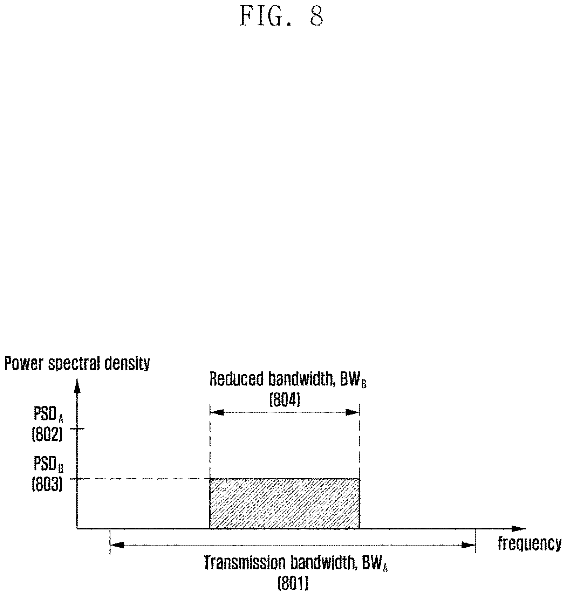

FIG. 8 is a diagram showing another example of the relationship between the base station transmission bandwidth and transmission power in base station energy saving mode (hereinafter referred to as "base station ES mode 3") in which operations for base station energy savings are applied. According to FIG. 8, an example is shown in which the base station operates in a state where the transmission bandwidth is reduced from $BW_A$ (801) of base station normal mode to $BW_B$ (804) and the PSD is also reduced from $PSD_A$ (802) of base station normal mode to $PSD_B$ (803). Hence, the total transmission power used by the base station is $BW_B \times PSD_B$. If the base station operates in energy saving mode for time T, the total energy consumption of the base station becomes $BW_B \times PSD_B \times T$, resulting in an energy saving gain compared to base station normal mode. "Base station ES mode 3" operates with a reduced base station transmission bandwidth and a reduced PSD compared to base station normal mode, so it has the feature of obtaining a lot of gain in terms of base station energy saving. However, as both the base station transmission bandwidth and the PSD are reduced, a corresponding decrease in cell capacity, cell coverage, and throughput may be expected.

The base station may notify the UE through signaling whether the base station is operating in (or, is configured with) base station normal mode or base station energy saving mode. Additionally, when operating in base station energy saving mode, the base station may notify the UE of which mode is specifically applied among "base station ES mode 1", "base station ES mode 2", and "base station ES mode 3" described above, and configuration information regarding the transmission bandwidth and PSD of the base station. This signaling may be performed in various ways. For example, it may be physical layer signaling, RRC signaling, or MAC CE. The base station may separately transmit the signaling to individual UEs through UE specific signaling, but from the perspective that mode switching of the base station is commonly applied to all UEs within the base station coverage, cell common signaling being commonly applied to all UEs within the cell may be used to reduce signaling overhead. Additionally, the base station may apply the base station energy saving mode on a specific cell basis, a specific bandwidth part (BWP) basis, or a specific bandwidth basis.

Among the base station energy saving modes, in the case of "base station ES mode 2" and "base station ES mode 3", which reduce the transmission bandwidth of the base station, constraints may be added to ensure that not only the reduced transmission bandwidth of the base station is at least equal to or greater than the transmission bandwidth of a specific downlink physical channel and physical signal but also the frequency domain position of the reduced transmission bandwidth of the base station includes the specific downlink physical channel and physical signal. The specific downlink physical channel and physical signal may include at least one of various downlink physical channels and physical signals such as PSS, SSS, PBCH, PDCCH, and CSI-RS.

For example, by requiring the reduced transmission bandwidth of the base station to include PSS, SSS, and PBCH, which are essential signals for initial access of the UE, in the frequency domain, even if the base station is in energy saving mode, the transmission bandwidth and frequency domain location of PSS, SSS, and PBCH are maintained without change, thereby ensuring that there is no problem with the initial access of the UE. For the same reason, an additional restriction may be applied so that the reduced transmission bandwidth of the base station includes CORESET 0 in the frequency domain. Hence, CORESET 0 may remain to be fixed regardless of whether the base station is in energy saving mode. This is because CORESET 0 is a CORESET to which the PDCCH, which schedules system information to be obtained by the UE in the initial access stage of the UE, is mapped among CORESETs being time-frequency resources to which the PDCCH is mapped.

Unlike the case where the transmission bandwidth is fixed in advance, such as PSS, SSS, and PBCH, the transmission bandwidth of the PDSCH may be changed instantaneously through the PDCCH for scheduling the PDSCH. Hence, if the base station is in energy saving mode, the base station may properly perform scheduling so that the PDSCH transmission bandwidth is included in the reduced transmission bandwidth of the base station. That is, when determining the reduced transmission bandwidth of the base station, additional constraints considering the transmission bandwidth of the PDSCH in advance are unnecessary.

Or, as an additional variation, the above constraints may be applied differently for the PDSCH by distinguishing between a PDSCH for transmitting system information and a PDSCH for transmitting general data other than system information. For example, as to the PDSCH for transmitting system information, scheduling may be constrained so that the PDSCH is included in the reduced transmission bandwidth of the base station like a case of PSS, SSS, and PBCH. On the other hand, this additional constraint may be not applied to the PDSCH for transmitting general data other than system information, and such a PDSCH may be left to the base station's scheduling.

In base station energy saving mode, if there is no minimum bandwidth limitation on the reduced transmission bandwidth of the base station and the reduced transmission bandwidth of the base station is set to 0, this means that the base station transmission operation is stopped. Therefore, the base station energy saving effect is maximized, but communication between the UE and the base station is impossible during the corresponding time period.

Among the base station energy saving modes, in the case of "base station ES mode 1" and "base station ES mode 3", which reduce the PSD of the base station, constraints may be added to ensure that the reduced PSD of the base station is at least equal to or greater than the minimum PSD. This minimum PSD may be agreed in advance between the base station and the UE to ensure the UE's reception quality of the downlink physical channel or physical signal at a specific level or higher, or may be notified by the base station to the UE through signaling. This base station signaling may be represented in various forms, such as minimum PSD, downlink transmission power to achieve the minimum PSD, and the other.

In base station energy saving mode, if there is no minimum PSD limitation on the reduced PSD of the base station and the reduced PSD of the base station is set to 0, this means that the base station transmission operation is stopped. Therefore, the base station energy saving effect is maximized, but communication between the UE and the base station is impossible during the corresponding time period.

Hereinabove, "base station ES mode 1", "base station ES mode 2", and "base station ES mode 3" have been described from the perspective of downlink transmission of the base station. That is, basically, the uplink reception operation of the base station may be understood as an independent operation separate from the downlink transmission operation of the base station. However, in the case of a TDD system in which the uplink and downlink use a common frequency, the base station's operation to reduce the downlink transmission bandwidth may be associated with the base station's operation to reduce the uplink reception bandwidth. For example, in "base station ES mode 2", if the base station reduces the downlink transmission bandwidth, the uplink reception bandwidth may be similarly reduced without changing or adding settings.

<Second Embodiment>

The second embodiment describes a detailed method of switching the base station state from base station normal mode to base station energy saving mode, or conversely, switching from base station energy saving mode to base station normal mode for base station energy savings.

The base station energy saving mode described in the second embodiment includes, but not limited to, the specific methods described in the first embodiment.

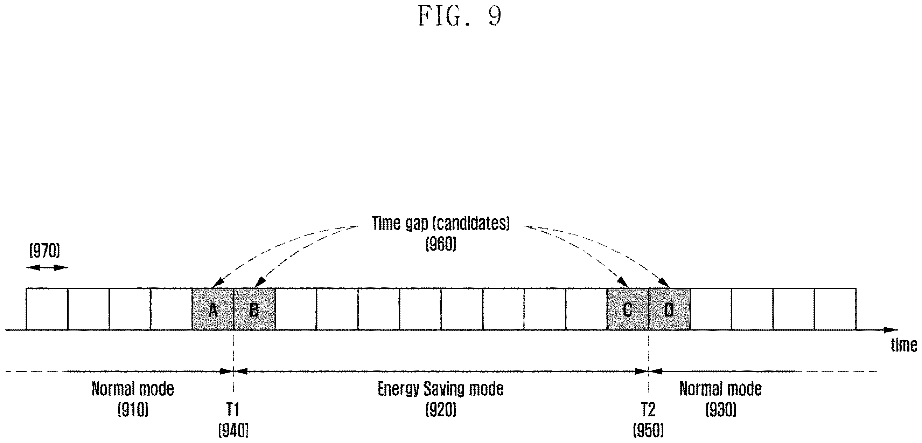

FIG. 9 is a diagram showing an example of switching between base station normal mode and base station energy saving mode over time.

With reference to FIG. 9, for example, the base station may transition from base station normal mode 910 to base station energy saving mode 920 at time T1 (940) and then transition back to base station normal mode 930 at time T2 (950). Indicia 970 may indicate a time duration corresponding to one slot, and this may be understood as a specific time duration indicated by a certain number of radio frames or half frames, a certain number of slots or/and symbols, or an absolute time unit (msec). In FIG. 9, A, B, C and D (960) represent candidate positions of time gaps required for state transitions of the base station. A, B, C and D may each be an entire slot, a time period within a slot, or a time period longer than a slot, and accordingly, the unit of A, B, C or D may be represented in various ways such as slot, symbol, msec, or the other.

According to the base station energy saving mode described in the first embodiment, in order for the base station to transition between base station normal mode and base station energy saving mode, at least changing the base station transmission bandwidth or changing the PSD is required, and thus processing time may be required correspondingly for the power amplifiers, RF and baseband components. In the following description, this processing time will be referred to as "processing time P". Also, A, B, C and D indicating time gap candidate positions are at least equal to or greater than "processing time P". Among the time gap candidate positions, the actual time gap position may be determined according to various methods as follows.

- Time gap mapping method 1: time gap mapping (B, D) including "processing time P" after base station mode switching. This has the characteristic of prioritizing the operation of the currently ongoing base station mode by **transferring** resource consumption due to the time gap to after base station mode switching.
- Time gap mapping method 2: time gap mapping (A, C) including "processing time P" before base station mode switching. This has the characteristic of prioritizing the operation after base station mode switching by arranging resource consumption due to the time gap before base station mode switching.
- Time gap mapping method 3: time gap mapping (B, C) including "processing time P" during base station energy saving mode. This has the characteristic of prioritizing the operation in base station normal mode by limiting resource consumption due to the time gap to base station energy saving mode.
- Time gap mapping method 4: time gap mapping (A, D) including "processing time P" during base station normal mode. This has the characteristic of prioritizing the operation in base station energy saving mode by limiting resource consumption due to the time gap to base station normal mode.

- Time gap mapping method 5: time gap mapping (B) including "processing time P" after switching from base station normal mode to base station energy saving mode. This has the characteristic of prioritizing the operation in base station normal mode by limiting resource consumption due to the time gap to after switching to base station energy saving mode.
- Time gap mapping method 6: time gap mapping (D) including "processing time P" after switching from base station energy saving mode to base station normal mode. This has the characteristic of prioritizing the operation in base station energy saving mode by limiting resource consumption due to the time gap to after switching to base station normal mode.

The base station and the UE may operate according to a pre-agreed method among the various time gap mapping methods described above, or the base station may notify the UE of specific time gap mapping information through higher layer signaling. A combination of one or more of the methods described above may be used.

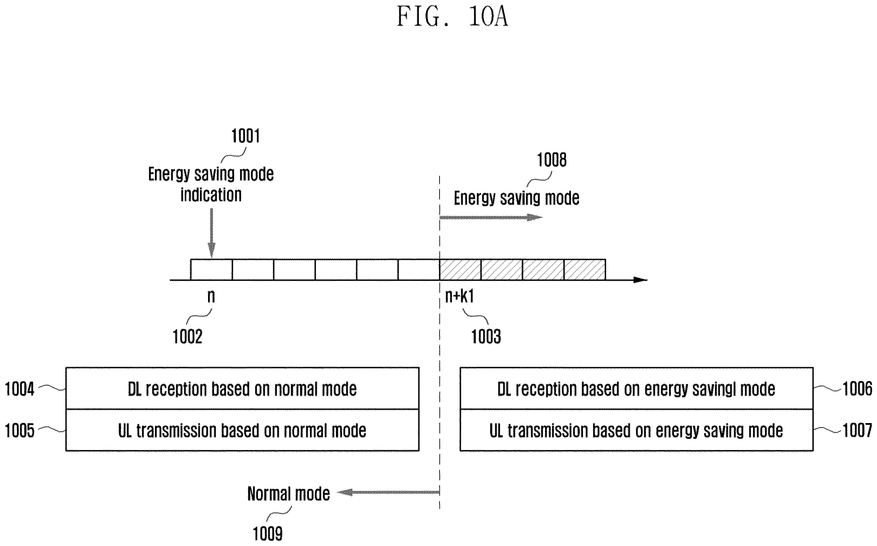

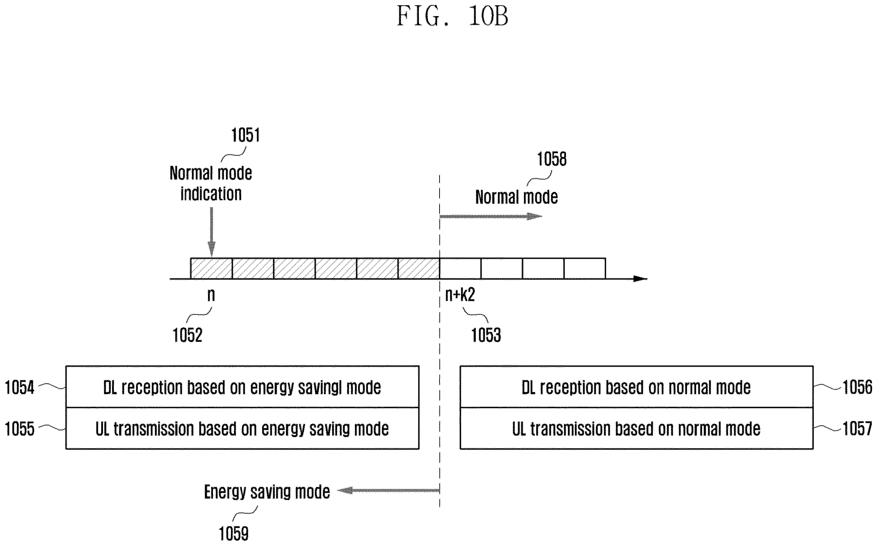

Next, a description will be given of UE operations when switching between base station energy saving mode and base station normal mode with reference to FIGS. 10A and 10B. In FIGS. 10A and 10B, "time gap mapping method 2" described above and a time gap expressed in slots are assumed. The operations according to FIGS. 10A and 10B may be generalized and applied to other time gap mapping methods and time gap expression methods described above.

FIG. 10A is a diagram showing an example of a downlink reception method and an uplink transmission method of a UE in response to switching from base station normal mode to base station energy saving mode.

According to FIG. 10A, the UE receives a signaling 1001 indicating switching to base station energy saving mode (hereinafter "signaling A") in slot n (1002) from the base station. "Signaling A" may include information such as control information notifying switching to energy saving mode, control information indicating the timing of switching to energy saving mode, and a cell indication indicating the cell (or/and BWP) to which energy saving mode is applied. The UE completes application of base station energy saving mode in slot n+k1 (1003) being after a specific processing time k1 for obtaining "signaling A" and processing related operations. Hence, the UE performs operations according to base station normal mode **until slot n+k1-1,** which is before application of base station energy saving mode is completed. That is, **until slot n+k1-1,** the UE performs downlink signal reception according to base station normal mode (1004) and performs uplink signal transmission according to base station normal mode (1005). Then, from slot n+k1 at which application of base station energy saving mode is completed, the UE performs operations according to base station energy saving mode.

That is, from slot n+k1 onwards, the UE performs downlink signal reception according to base station energy saving mode (1006) and performs uplink signal transmission according to base station energy saving mode (1007). The UE operation according to base station energy saving mode follows "base station energy saving method 1-1", "base station energy saving method 1-2", "base station energy saving method 2", and "base station energy saving method 3" described above.

The operation disclosed in FIG. 10A may be modified in various ways. For example, base station energy saving mode may be applied only to the downlink reception operation of the UE and not to the uplink transmission operation of the UE. That is, in the example of FIG. 10A, regardless of "signaling A", the uplink transmission operation of the UE may continue to operate on the assumption of base station normal mode. In other words, even after slot n+k1, operation 1005 may be continuously applied without applying operation 1007.

FIG. 10B is a diagram showing an example of a downlink reception method and an uplink transmission method of a UE in response to switching from base station energy saving mode to base station normal mode.

According to FIG. 10B, the UE receives a signaling 1051 indicating switching to base station normal mode (hereinafter "signaling B") in slot n (1052) from the base station. "Signaling B" may include information such as control information notifying switching to base station normal mode, control information indicating the timing of switching to base station normal mode, and a cell indication indicating the cell (or/and BWP) to which base station normal mode is applied. The UE completes application of base station normal mode in slot n+k2 (1053) being after a specific processing time k2 for obtaining "signaling B" and processing related operations. Hence, the UE performs operations according to base station energy saving mode **until slot n+k2-1,** which is before application of base station normal mode is completed. That is, **until slot n+k2-1,** the UE performs downlink signal reception according to base station energy saving mode (1054) and performs uplink signal transmission according to base station energy saving mode (1055). The UE operation according to base station energy saving mode follows "base station energy saving method 1-1", "base station energy saving method 1-2", "base station energy saving method 2", and "base station energy saving method 3" described above.

Then, from slot n+k2 at which application of base station normal mode is completed, the UE performs operations according to base station normal mode. That is, from slot n+k2 onwards, the UE performs downlink signal reception according to base station normal mode (1056) and performs uplink signal transmission according to base station normal mode (1057).

The operation in FIG. 10B may be modified in various ways. For example, base station energy saving mode may be applied only to the downlink reception operation of the UE and not to the uplink transmission operation of the UE. That is, in the example of FIG. 10B, regardless of "signaling B", the uplink transmission operation of the UE may continue to operate on the assumption of base station normal mode. In other words, even before slot n+k2, the operation indicated by indicia 1057 may be continuously applied without applying the operation indicated by indicia 1055.

As another modified example of FIG. 10B, in addition to "signaling B" (or without separately using "signaling B"), the base station may transition from base station energy saving mode to base station normal mode based on a timer. That is, after a preset timer expires, the base station may transition from base station energy saving mode to base station normal mode. Here, in order for the base station and the UE to have a common understanding of when base station mode switching will be applied, the countdown start point of the timer may be defined in advance. For example, in the example of FIG. 10A, the UE and the base station may start counting down the timer from slot n+k1 being a timing at which the UE applies base station energy saving mode. Alternatively, the base station may notify the UE of the countdown start point of the timer through signaling. The timer's value may be notified by the base station to the UE by including it in "signaling A", may be set in advance through higher signaling, or may be determined in advance.

As described above, "signaling A" and "signaling B" may be performed by various methods. For example, physical layer signaling, RRC signaling, or MAC CE may be possible. The base station may separately transmit the signaling to individual UEs through UE specific signaling, but from the perspective that mode switching of the base station is commonly applied to all UEs within the base station coverage, cell common signaling being commonly applied to all UEs within the cell may be used to reduce signaling overhead.

"Signaling A" and "signaling B" are a signaling by which the base station transmits information about base station mode to the UE; in a similar way, a base station may transmit information about base station mode to a neighbor base station through signaling (hereinafter referred to as "signaling X" for convenience of description). In this case, "signaling X" may include, in addition to the control information included in "signaling A" and "signaling B", cell ID information about a cell to which "signaling A" or "signaling B" is applied. "Signaling X" may be used to control interference between base stations. Or, a base station having received "signaling X" may transmit information about base station mode of a neighbor base station to a plurality of UEs connected to the base station. In this case, the information about base station mode of the neighbor base station may include **at least a portion of** the information included in "signaling X".

<Third Embodiment>

The third embodiment describes a measurement reporting method of the UE when the base station state is switched from base station normal mode to base station energy saving mode for base station energy savings.

UE measurement is a measurement operation performed by the UE on the channel state between the UE and the base station, and various measurement values may be defined. By notifying the UE of configuration information related to measurement reporting in advance through signaling, the base station may control the measurement reporting method including, specifically, a reference signal to be measured by the UE, measurement value, reporting periodicity, reporting condition, and the other. The base station may determine whether to handover the UE to another cell and perform efficient scheduling operations with reference to the measurement report received from the UE. The UE's measurement report may be classified into a layer 3 (L3) measurement report and a layer 1 (L1) measurement report.

  ∘ L3 measurement report: the L3 measurement report is a measurement report that is reported by the UE to the base station in the form of higher layer L3 signaling, and is characterized in that the UE performs measurement for a relatively long observation time. Hence, it is suitable for measuring a channel state that does not change relatively rapidly over time. It is transmitted through the PUSCH being an uplink physical channel for data transmission, and may include a relatively large amount of information. The following information is included in the L3 measurement report.

RSRP (reference signal received power): it is a value representing the received power for a reference signal, and is used to determine whether the radio link quality of the cell having transmitted the reference signal is maintained at or above a specific level. The above reference signal may be SSB or CSI-RS.

RSRQ (reference signal received quality): it is a value representing the received quality for a reference signal, and is used, similarly to RSRP above, to determine whether the radio link quality of the cell having transmitted the reference signal is maintained at or above a specific level. The above reference signal may be SSB or CSI-RS.

- SINR (signal-to-noise and interference ratio): it is a value representing the ratio of the received signal to noise and interference for a reference signal, and the reference signal may be SSB or CSI-RS.

  ∘ L1 measurement report: the L1 measurement report is a measurement report that is reported by the UE to the base station in the form of physical layer L1 signaling, and is characterized in that the UE performs measurement for a relatively short observation time. Hence, it is suitable for reporting a relatively instantaneous channel state. The reference signal to be measured by the UE may be SSB or CSI-RS. The L1 measurement report is transmitted over the PUCCH or PUSCH, and may include a relatively small amount of information. The following information is included in the L1 measurement report.

- CQI (channel quality indicator): information indicating a CQI index composed of a modulation scheme and coding rate that satisfy a predefined minimum reception error rate for the PDSCH
- PMI (precoding matrix indicator): information indicating a precoding matrix selected by the UE
- CRI (CSI-RS resource indicator): information indicating a CSI-RS measured by the UE
- RI (rank indicator): information indicating a rank selected by the UE
- LI (layer indicator): information indicating the best layer among the precoding matrices reported by the UE
- SSBRI (SS/PBCH block resource indicator): information about the SSB measured by the UE
- L1-RSRP (reference signal received power): L1-RSRP information measured by the UE

The UE may perform not only measurement reporting on the cell to which it is currently connected but also measurement reporting on a neighbor cell. For measurement reporting on a neighbor cell, the UE performs a measurement operation on a reference signal of the neighbor cell. The UE may report the measurement report periodically according to base station settings (periodic reporting), or may report the measurement report if a preset condition is satisfied (event-triggered reporting).

For L1 measurement reporting or L3 measurement reporting as described above, the UE performs a measurement operation on a given reference signal for a preset observation time period. Although the characteristic of the reference signal changes according to either base station normal mode or base station energy saving mode, if the UE measures both the reference signal of base station normal mode and the reference signal of base station energy saving mode for one observation time period, the accuracy of the resulting measurement values may be significantly reduced. Accordingly, the third embodiment proposes a method that adjusts the observation time period of a reference signal for measurement reporting of the UE in conjunction with base station mode switching. That is, if the base station mode changes, the UE ends the ongoing observation time period for a reference signal and starts a new observation time period.

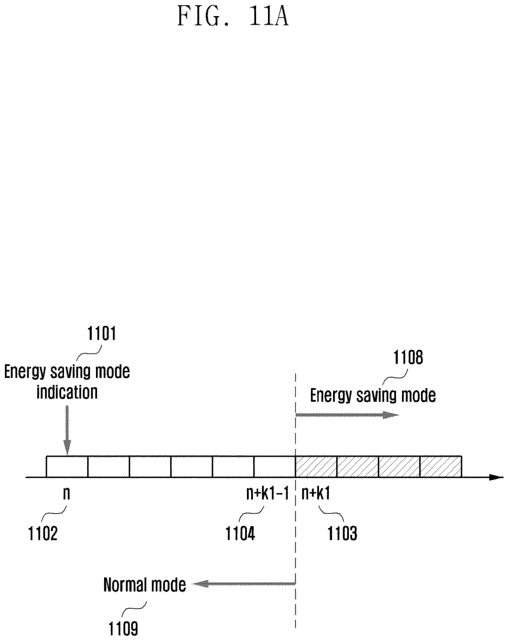

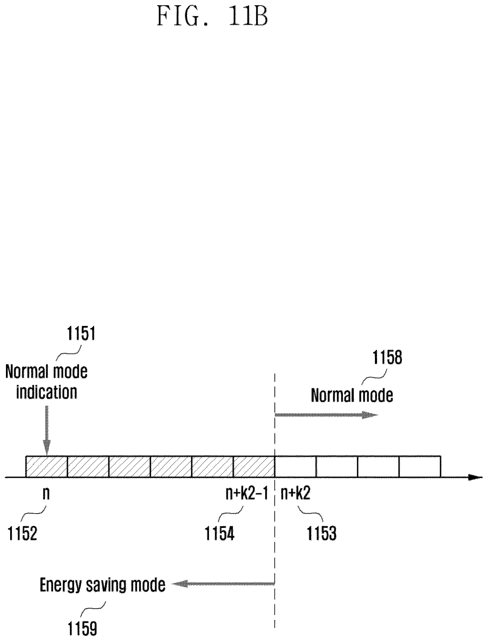

Next, a description will be given of specific operations of the third embodiment with reference to FIGS. 11A and 11B.

FIG. 11A is a diagram showing an example of UE measurement reporting operation when the base station switches from base station normal mode to base station energy saving mode.

In an example of the third embodiment, it is assumed that at least some of the characteristics of the reference signal (may include SSB or CSI-RS) transmitted by the base station change according to "base station energy saving method 1-1", "base station energy saving method 1-2", "base station energy saving method 2", or "base station energy saving method 3" described above. For example, it is assumed that at least one characteristic in the transmission bandwidth of the reference signal, transmission power, power amplifiers, transmission antennas, and time mapping changes depending on the base station mode. Information about such a changed characteristic of the reference signal may be included in signaling 1101 indicating base station mode switching.

In this case, the UE observes and measures the reference signal for measurement reporting only during the time period in which the characteristics of the reference signal remain the same. That is, observation and measurement of a reference signal in base station normal mode 1109 is valid only in base station normal mode, and observation and measurement of a reference signal in base station energy saving mode 1108 is valid only in base station energy saving mode. Hence, the UE does not perform observation and measurement of a reference signal in a mixed form across base station normal mode and base station energy saving mode.

The following methods are possible for changing the timing of observation and measurement of the reference signal.

- Method 1: the observation time period for the reference signal is ended and restarted with respect to the timing when base station mode switching is applied. Referring to FIG. 11A, slot n+k1 (1103) corresponds to the above timing. In this case, the UE performs measurement reporting for base station energy saving mode 1108 on the basis of the reference signal measured from slot n+k1 (1103), and the UE may perform measurement reporting for base station normal mode 1109 on the basis of the reference signal measured up to slot n+k1-1 (1104) or may skip measurement reporting for base station normal mode.
- Method 2: the observation time period for the reference signal is ended with respect to the timing when the UE receives signaling 1101 indicating base station mode switching (in FIG. 11A, slot n (1102) corresponds to this timing), and the observation time period for the reference signal is restarted with respect to the timing when base station mode switching is applied (in FIG. 11A, slot n+k1 (1103) corresponds to this timing). In this case, the UE performs measurement reporting for base station energy saving mode 1108 on the basis of the reference signal measured from slot n+k1 (1103), and the UE may perform measurement reporting for base station normal mode 1109 on the basis of the reference signal measured up to slot n (1102) or may skip measurement reporting for base station normal mode.

In the same way, when the base station switches from base station energy saving mode to base station normal mode, the method of changing the observation and measurement of the reference signal may also be applied. With reference to FIG. 11B, method 1 and method 2 described above may be applied as follows.

FIG. 11B is a diagram showing an example of UE measurement reporting operation when the base station switches from base station energy saving mode to base station normal mode.

According to FIG. 11B, the following methods are possible for changing the timing of observation and measurement of the reference signal.

- Method 1: the observation time period for the reference signal is ended and restarted with respect to the timing when base station mode switching is applied. Referring to FIG. 11B, slot n+k2 (1153) corresponds to the above timing. In this case, the UE performs measurement reporting for base station normal mode 1158 on the basis of the reference signal measured from slot n+k2 (1153), and the UE may perform measurement reporting for base station energy saving mode 1159 on the basis of the reference signal measured up to slot n+k2-1 (1154) or may skip measurement reporting for base station energy saving mode.
- Method 2: the observation time period for the reference signal is ended with respect to the timing when the UE receives signaling 1151 indicating base station mode switching (in FIG. 11B, slot n (1152) corresponds to this timing), and the observation time period for the reference signal is restarted with respect to the timing when base station mode switching is applied (in FIG. 11B, slot n+k2 (1153) corresponds to this timing). In this case, the UE performs measurement reporting for base station normal mode 1158 on the basis of the reference signal measured from slot n+k2 (1153), and the UE may perform measurement reporting for base station energy saving mode 1159 on the basis of the reference signal measured up to slot n (1152) or may skip measurement reporting for base station normal mode.

As a modified method for the third embodiment, control information indicating whether to maintain or change the UE's observation and measurement of the reference signal may be included in signaling 1101 or 1151 indicating base station mode switching. And, in case of changing observation and measurement of the reference signal, the base station may additionally notify the UE of whether to apply method 1 or method 2 through prior agreement or by including it in the above control information. Therefore, the base station is able to more finely control the observation and measurement operation of the UE for the reference signal.

<Fourth Embodiment>

The fourth embodiment describes a method that associates, when the base station transmission bandwidth is adjusted for base station energy savings, adjustment of the base station transmission bandwidth and adjustment of the UE's bandwidth together.

Similarly to adjusting the base station transmission bandwidth for base station energy savings, the bandwidth of the UE may be adjusted to efficiently manage UE power consumption. For example, in cases where the UE's power consumption efficiency is to be increased, the UE's spare power is insufficient, and a high data rate is not required, the bandwidth of the UE may be adjusted to be narrow or the frequency domain position may be changed according to the determination of the base station. The bandwidth and frequency domain position of the UE adjusted in this way is called a bandwidth part (BWP). The UE's transmission and reception operations are limited to the BWP, and the UE does not perform transmission and reception operations in regions other than the BWP.

The BWP may be operated separately as a downlink BWP and uplink BWP, or may be operated as a BWP common to the uplink and uplink without distinction. The base station may configure one or multiple BWPs to the UE and notify them through signaling, and the configuration information for each BWP includes at least one piece of information such as an identifier (BWP ID) for identifying the BWP, frequency domain position of the BWP, bandwidth of the BWP, subcarrier spacing applied to the BWP, and CP length applied to the BWP. If multiple BWPs are configured, the base station notifies the UE of the BWP to be used for performing transmission and reception through signaling.

When the transmission bandwidth ($BW_{BS}$) of the base station is adjusted according to base station transmission bandwidth adjustment and the bandwidth ($BW_{UE}$) of the UE is adjusted according to UE BWP adjustment, it is necessary to clearly define the transmission and reception operations of the UE and the base station. According to the characteristics that UE BWP adjustment is applied to one or multiple UEs and base station transmission bandwidth adjustment is applied to all UEs in a cell managed by the base station, the following various methods are possible.

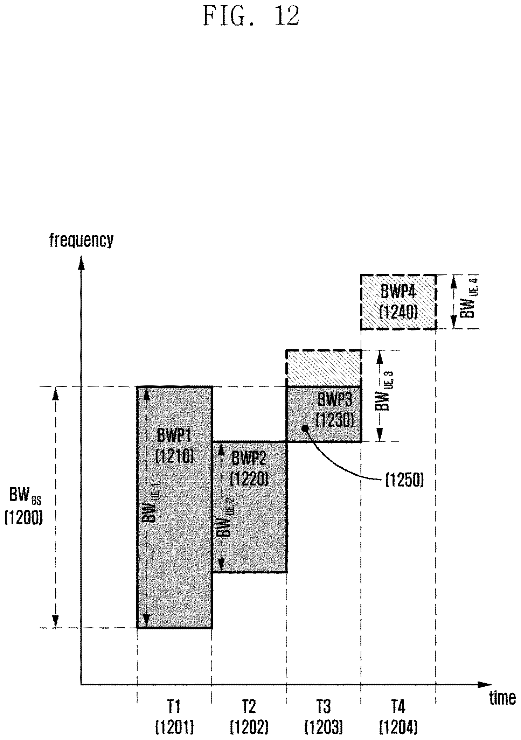

Next, a description will be given of a specific method for the fourth embodiment with reference to FIG. 12. FIG. 12 is a diagram showing an example of a case where the UE BWP is changed after the transmission bandwidth of the base station is determined to be $BW_{BS}$ (1200).

According to FIG. 12, the horizontal axis in FIG. 12 represents the time domain, and the vertical axis represents the frequency domain. It is shown that the BWP of the UE is changed to BWP1 (1210) with a bandwidth of $BW_{UE,1}$ (=$BW_{BS}$) during time period T1 (1201), the BWP of the UE is changed to BWP2 (1220) with a bandwidth of $BW_{UE,2}$ (<$BW_{BS}$) during time period T2 (1202), the BWP of the UE is changed to BWP3 (1230) with a bandwidth of $BW_{UE,3}$ (<$BW_{BS}$, $BW_{UE,3}$ is partially included in $BW_{BS}$) during time period T3 (1203), and the BWP of the UE is changed to BWP4 (1240) with a bandwidth of $BW_{UE,4}$ (<$BW_{BS}$, $BW_{UE,4}$ is not included in $BW_{BS}$) during time period T4 (1204). However, the methods described below are equally applicable to the case where the base station transmission bandwidth is adjusted after the UE BWP is determined. That is, the methods described below are applicable regardless of the order between UE BWP adjustment and base station transmission bandwidth adjustment.

- Method A: method A is a transmission method of the UE and assumes that the base station performs UE BWP adjustment and base station transmission bandwidth adjustment independently of each other. The UE's transmission operation proceeds within the adjusted UE BWP, but the following additional condition applies.

$$(\text{Condition 1}) \ BW_{\text{UE,actual}} \leq MIN \ (BW_{\text{UE}}, BW_{\text{BS}}).$$

That is, the actual bandwidth ($BW_{UE,\ actual}$) of the signal transmitted by the UE cannot be greater than the minimum value among the adjusted UE bandwidth ($BW_{UE}$) and the adjusted base station transmission bandwidth ($BW_{BS}$). MIN (X, Y) represents the minimum value among X and Y

(Condition 2) The frequency domain mapping position of the signal actually transmitted by the UE is located within the overlapping region between the frequency domain of the adjusted UE BWP and the frequency domain of the adjusted base station transmission bandwidth.

The UE transmission operation with application of above **Condition 1 and Condition 2** to the example of FIG. 12 may be explained as follows. During time period T1 (1201), the bandwidth of the signal actually transmitted by the UE cannot exceed $MIN(BW_{UE,1}, BW_{BS}) = BW_{UE,1} = BW_{BS}$ according to Condition 1, and the frequency domain mapping position of the signal actually transmitted by the UE is located within BWP1 (1210) being the overlapping region between $BW_{UE,1}$ and $BW_{BS}$ according to Condition 2.

During time period T2 (1202), the bandwidth of the signal actually transmitted by the UE cannot exceed $MIN(BW_{UE,2}, BW_{BS}) = BW_{UE,2}$ according to Condition 1, and the frequency domain mapping position of the signal actually transmitted by the UE is located within BWP2 (1220) being the overlapping region between $BW_{UE,2}$ and $BW_{BS}$ according to Condition 2.

During time period T3 (1203), the bandwidth of the signal actually transmitted by the UE cannot exceed $MIN(BW_{UE,3}, BW_{BS}) = BW_{UE,3}$ according to Condition 1, and the frequency domain mapping position of the signal actually transmitted by the UE is located within a region indicated by 1250 being the overlapping region between $BW_{UE,3}$ and $BW_{BS}$ according to Condition 2.

During time period T4 (1204), the bandwidth of the signal actually transmitted by the UE cannot exceed $MIN (BW_{UE,4}, BW_{BS}) = BW_{UE,4}$ according to Condition 1, and for the frequency domain mapping position of the signal actually transmitted by the UE, as there is no overlapping region between $BW_{UE,4}$ and $BW_{BS}$ according to Condition 2, signal transmission of the UE is not allowed.

- Method B: method B is a transmission method of the base station and assumes that the base station performs UE BWP adjustment and base station transmission bandwidth adjustment independently of each other. The base station's transmission operation proceeds in consideration of the adjusted UE BWP, but the following conditions are applied depending on the signal to be transmitted.

(Condition 3) If the signal to be transmitted by the base station is a UE-specific signal or UE-specific channel, the base station transmits the signal to the UE with application of above Condition 1 and Condition 2.

For example, the channel or signal to which Condition 3 is applied includes the PDSCH carrying downlink data that the base station intends to transmit to a specific UE, and the PDCCH for scheduling the PDSCH.

(Condition 4) If the signal to be transmitted by the base station is a cell common signal or cell common channel, the base station transmits the cell common signal or cell common channel to the UE within the adjusted base station transmission bandwidth regardless of Condition 1 or Condition 2 above. Hence, base station transmission may occur outside the adjusted UE BWP, and in this case, the UE may only receive a signal of the base station within the adjusted BWP.

For example, the channel or signal to which Condition 4 applies includes at least one of PSS, SSS, PBCH, CSI-RS, or the other.

The base station transmission operation with application of above Condition 3 and Condition 4 to the example of FIG. 12 may be explained as follows. During time period T1 (1201), for a signal to which Condition 3 applies, the bandwidth of the signal actually transmitted by the base station cannot exceed $MIN(BW_{UE,1}, BW_{BS}) = BW_{UE,1} = BW_{BS}$, and the frequency domain mapping position of the signal actually transmitted by the base station is located within BWP1 (1210) being the overlapping region between $BW_{UE,1}$ and $BW_{BS}$. During time period T1 (1201), for a signal to which Condition 4 applies, the bandwidth of the signal actually transmitted by the base station cannot exceed $BW_{BS}$, and the frequency domain mapping position of the signal actually transmitted by the base station is located within $BW_{BS}$.

During time period T2 (1202), for a signal to which Condition 3 applies, the bandwidth of the signal actually transmitted by the base station cannot exceed $MIN(BW_{UE,2}, BW_{BS}) = BW_{UE,2}$, and the frequency domain mapping position of the signal actually transmitted by the base station is located within BWP2 (1220) being the overlapping region between $BW_{UE,2}$ and $BW_{BS}$. During time period T2 (1202), for a signal to which Condition 4 applies, the bandwidth of the signal actually transmitted by the base station cannot exceed $BW_{BS}$, and the frequency domain mapping position of the signal actually transmitted by the base station is located within $BW_{BS}$. Hence, the terminal cannot receive a signal of the base station that is mapped within the frequency domain of $BW_{BS}$ but mapped outside the frequency domain of BWP2 (1220).

During time period T3 (1203), for a signal to which Condition 3 applies, the bandwidth of the signal actually transmitted by the base station cannot exceed $MIN(BW_{UE,3}, BW_{BS}) = BW_{UE,3}$, and the frequency domain mapping position of the signal actually transmitted by the base station is located within BWP3 (1230) being the overlapping region between $BW_{UE,3}$ and $BW_{BS}$. During time period T3 (1203), for a signal to which Condition 4 applies, the bandwidth of the signal actually transmitted by the base station cannot exceed $BW_{BS}$, and the frequency domain mapping position of the signal actually transmitted by the base station is located within $BW_{BS}$. Hence, the terminal cannot receive a signal of the base station that is mapped within the frequency domain of $BW_{BS}$ but mapped outside the frequency domain of BWP3 (1230).

During time period T4 (1204), for a signal to which Condition 3 applies, the bandwidth of the signal actually transmitted by the base station cannot exceed $MIN(BW_{UE,4}, BW_{BS}) = BW_{UE,4}$, and for the frequency domain mapping position of the signal actually transmitted by the base station, as there is no overlapping region between $BW_{UE,4}$ and $BW_{BS}$, signal transmission of the base station is not allowed. During time period T4 (1204), for a signal to which Condition 4 applies, the bandwidth of the signal actually transmitted by the base station cannot exceed $BW_{BS}$, and the frequency domain mapping position of the signal actually transmitted by the base station is located within $BW_{BS}$. Hence, the terminal cannot receive a signal of the base station that is mapped within the frequency domain of $BW_{BS}$ but mapped outside the frequency domain of BWP4 (1240).

- Method C: method C enables the base station to adjust the bandwidth and frequency domain mapping position of the UE BWP so that the UE BWP is included in the base station transmission bandwidth. For example, the base station configures the UE BWP so that a UE BWP such as BWP3 (1230) or BWP4 (1240) in FIG. 12 is not configured. The UE performs transmission and reception within the adjusted UE BWP. Even in the case of method C, the base station transmission method of method B may be applied.

<Fifth Embodiment>

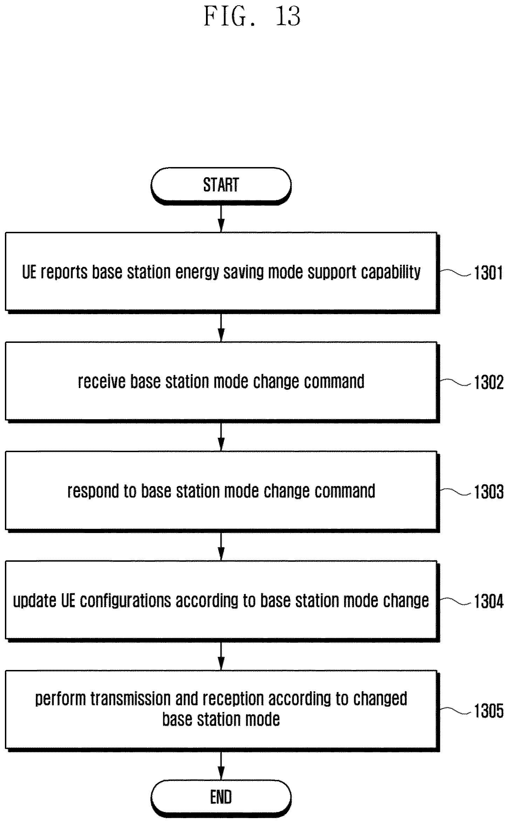

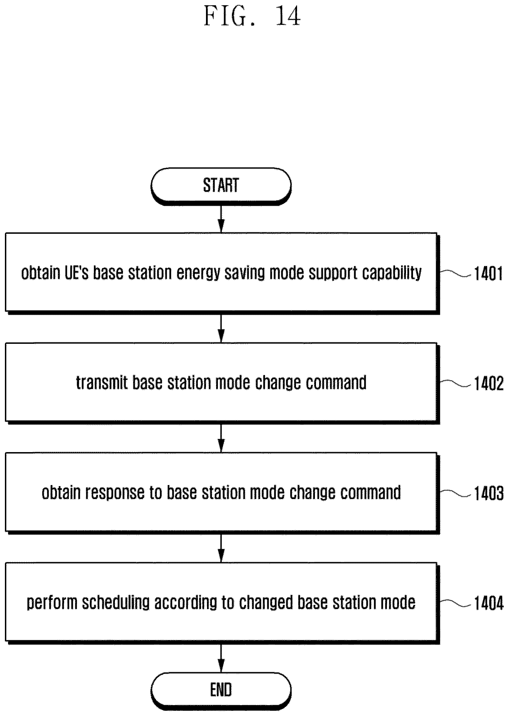

The fifth embodiment describes an example of a UE procedure and base station procedure that switch the base station state from base station normal mode to base station energy saving mode or, conversely, from base station energy saving mode to base station normal mode for base station energy savings. The UE procedure and base station procedure of FIGS. 13 and 14 may be performed in combination with at least one of the first to fourth embodiments.

FIG. 13 is a diagram illustrating an example of a procedure performed by a UE to apply base station's switching to base station energy saving mode or base station normal mode according to an embodiment of the disclosure.

At step 1301, the UE reports UE capability information including a base station energy saving mode support capability to the base station. Specifically, the UE capability information may include at least one piece of capability information related to base station energy saving mode such as information indicating whether the UE supports base station energy saving mode, control information about the frequency band supported by the UE, control information about the channel bandwidth supported by the UE, or the other.

Then, at step 1302, if the UE successfully obtains signaling indicating switching of the base station mode to base station energy saving mode from the base station, the UE performs UE configuration update according to indicated base station energy saving mode. For example, this signaling may include at least one piece of configuration information related to base station energy saving mode such as information about the changed base station transmission bandwidth according to base station energy saving mode, information about the changed power spectral density, information about a timer for base station energy saving mode operation, configuration information about physical channels and physical signals whose transmission characteristics are changed, information about a time gap for mode switching, UE measurement configuration information for measurement reporting, or the other.

Alternatively, at step 1302, the UE may receive signaling indicating switching from base station energy saving mode to base station normal mode from the base station; in this case, this signaling may include at least one piece of configuration information related to base station normal mode such as information about the changed base station transmission bandwidth according to base station normal mode, information about the changed power spectral density, configuration information about physical channels and physical signals whose transmission characteristics are changed, information about a time gap for mode switching, UE measurement configuration information for measurement reporting, or the other. Additionally, information that can be included in the signaling for base station mode switching may be configured in advance to the UE through higher signaling.

In the case that UE has successfully obtained "base station mode change signaling", at step 1303, the UE transmits "base station mode change signaling response" control information to the base station. Transmission of this control information may be skipped.

At step 1304, the UE completes update of related UE configurations according to "base station mode change command". For example, upon receiving the above signaling, the UE may change the operating bandwidth or BWP configuration according to the changed base station transmission bandwidth and then change hardware settings such as RF and baseband components or software settings correspondingly. From step 1305, the UE performs transmission and reception according to the changed base station mode. UE transmission and reception operations according to a specific base station mode follow the above-described embodiments.

To carry out the disclosure, some of the steps listed above may be skipped or changed in their execution order, or steps not yet described may be added.

FIG. 14 is a diagram illustrating an example of a procedure performed by a base station to apply base station's switching to base station energy saving mode or base station normal mode according to an embodiment of the disclosure.

At step 1401, the base station obtains UE capability information including a base station energy saving mode support capability from the UE. Specifically, the UE capability information may include at least one piece of capability information related to base station energy saving mode such as information indicating whether the UE supports base station energy saving mode, control information about the frequency band supported by the UE, control information about the channel bandwidth supported by the UE, or the other.

Then, at step 1402, the base station performing mode switching transmits "base station mode change signaling" to the UE. If this signaling is signaling indicating switching from base station normal mode to base station energy saving mode, the above signaling may include, for example, at least one piece of configuration information related to base station energy saving mode such as information about the changed base station transmission bandwidth according to base station energy saving mode, information about the changed power spectral density, information about a timer for base station energy saving mode operation, configuration information about physical channels and physical signals whose transmission characteristics are changed, information about a time gap for mode switching, UE measurement configuration information for measurement reporting, or the other.

Alternatively, at step 1402, the base station may transmit signaling indicating switching from base station energy saving mode to base station normal mode to the UE; in this case, this signaling may include at least one piece of configuration information related to base station normal mode such as information about the changed base station transmission bandwidth according to base station normal mode, information about the changed power spectral density, configuration information about physical channels and physical signals whose transmission characteristics are changed, information about a time gap for mode switching, UE measurement configuration information for measurement reporting, or the other. Additionally, information that can be included in the signaling for base station mode switching may be configured in advance to the UE through higher signaling.

At step 1403, the base station successfully obtains "base station mode change signaling response" control information from the UE. Step 1403 may be skipped.

At step 1404, the base station performs a scheduling operation according to the changed base station mode. For example, the base station in base station energy saving mode may schedule the PDSCH within a limited bandwidth according to base station energy saving mode to transmit downlink data to the UE. Base station transmission and reception operations according to a specific base station mode follow the above-described embodiments.

To carry out the disclosure, some of the steps listed above may be skipped or changed in their execution order, or steps not yet described may be added.

In addition, an example of the method described in FIGS. 13 and 14 may be performed in combination with the first to fourth embodiments.

In a cell managed by a base station operating as described above, a UE supporting UE operation according to base station energy saving mode (referred to as UE A) and a UE not supporting it (referred to as UE B) may coexist. In the case of UE A, it may perform UE operations according to the specific embodiments described above. In the case of UE B, as it is unable to respond to changes in the base station transmission scheme according to base station energy saving mode, it may have a risk of performance degradation in transmission efficiency, cell capacity, throughput, and UE power consumption. Hence, if the base station can distinguish between UE A and UE B by referring to the UE capability report of a UE, it can take additional actions to prevent performance degradation of UE B. For example, the base station may handover UE B to a neighbor cell **managed by** a base station in base station normal mode other than the current cell that will switch to base station energy saving mode.

The fifth embodiment may be modified in various ways. For example, it is possible to skip the step of reporting UE's capabilities to the base station.

As another modified example of the fifth embodiment, it is also possible for the base station to operate without separately notifying the UE of "base station mode change signaling". That is, the UE may perform transmission and reception operations solely according to base station's scheduling without a need to distinguish whether the current base station is in base station normal mode or base station energy saving mode.

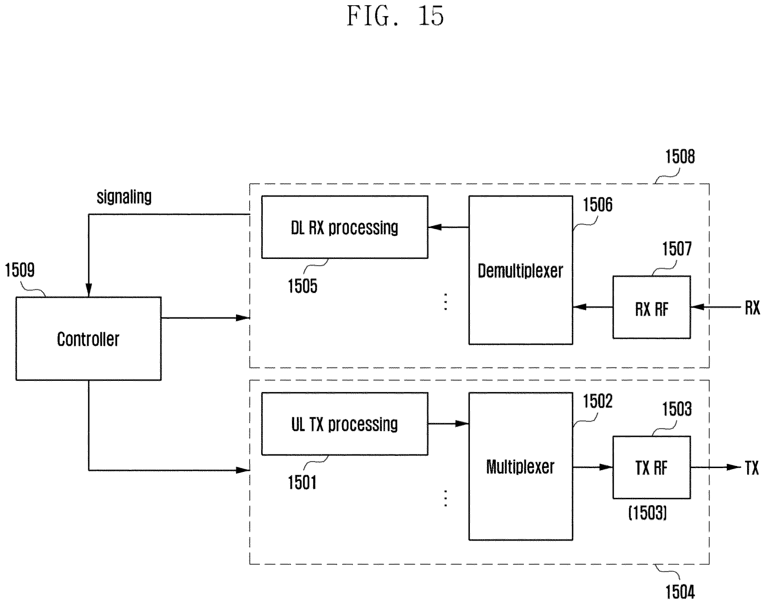

FIG. 15 is a diagram showing an example of a UE transceiver in a wireless communication system according to an embodiment of the disclosure. For convenience of explanation, components not directly related to the disclosure may be not shown or described.

With reference to FIG. 15, the UE may be composed of a transmitter 1504 including an uplink transmission processing block (UL TX processing) 1501, a multiplexer 1502, and a transmission RF block (TX RF) 1503; a receiver 1508 including a downlink reception processing block (DL RX processing) 1505, a demultiplexer 1506, and a reception RF block (RX RF) 1507; and a controller 1509. The controller 1509 may control individual component blocks of the receiver 1508 for receiving a data channel or control channel transmitted by the base station as described above, and individual component blocks of the transmitter 1504 for transmitting uplink signals.

In the transmitter 1504 of the UE, the uplink transmission processing block 1501 may generate a signal to be transmitted by performing processes such as channel coding and modulation. The signal generated in the uplink transmission processing block 1501 may be multiplexed with other uplink signals by the multiplexer 1502, signal-processed in the transmission RF block 1503, and then transmitted to the base station.

The receiver 1508 of the UE demultiplexes a signal received from the base station and distributes **the demultiplexing result** to individual downlink reception processing blocks. The downlink reception processing block 1505 may perform processes such as demodulation and channel decoding on the downlink signal of the base station to obtain control information or data transmitted by the base station. The receiver 1508 of the UE may support the operation of the controller 1509 by applying the output result of the downlink reception processing block to the controller 1509.

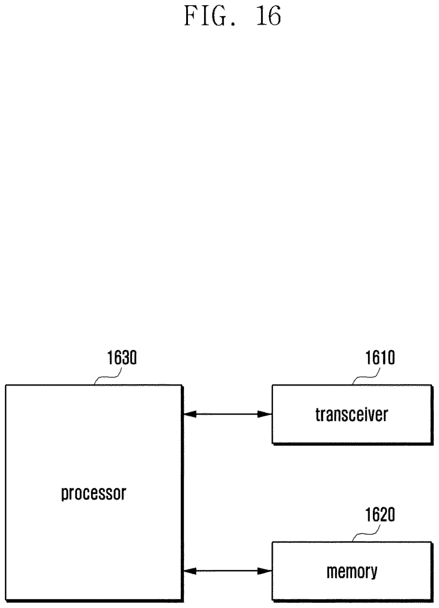

FIG. 16 is a block diagram showing an example of the structure of a UE according to an embodiment of the disclosure.

As shown in FIG. 16, the UE of the disclosure may include a processor 1630, a transceiver 1610, and a memory 1620. However, the components of the UE are not limited to those described above. For example, the UE may include more or fewer components than the above-described components. Further, the processor 1630, transceiver 1610, and memory 1620 may be implemented in the form of a single chip. According to one embodiment, the transceiver 1610 in FIG. 16 may include the transmitter 1504 and receiver 1508 in FIG. 15. Additionally, the processor 1630 in FIG. 16 may include the controller 1509 in FIG. 15.

According to one embodiment, the processor 1630 may control a series of processes in which the UE can operate according to the above-described embodiments of the disclosure. For example, **the processor 1630** may control components of the UE to perform the transmission and reception method of the UE depending on whether the base station mode is base station energy saving mode or base station normal mode according to an embodiment of the disclosure. The processor 1630 may be configured as one or multiple instances, and the processor 1630 may execute programs stored in the memory 1620 to perform UE transmission and reception operation in a wireless communication system applying carrier aggregation of the disclosure described above.

The transceiver 1610 may transmit and receive signals to and from a base station. The signals transmitted and received to and from a base station may include control information, and data. The transceiver 1610 may be composed of an RF transmitter that up-converts the frequency of a signal to be transmitted and amplifies the signal, and an RF receiver that low-noise amplifies a received signal and down-converts the frequency thereof. However, this is only an embodiment of the transceiver 1610, and the components of the transceiver 1610 are not limited to the RF transmitter and RF receiver. Additionally, the transceiver 1610 may receive a signal through a radio channel and output it to the processor 1630, and may transmit a signal output from the processor 1630 through a radio channel.

According to an embodiment, the memory 1620 may store programs and data necessary for the operation of the UE. Additionally, the memory 1620 may store control information or data included in signals transmitted and received by the UE. The memory 1620 may be composed of a storage medium such as ROM, RAM, hard disk, CD-ROM, and DVD, or a combination of storage media. Further, the memory 1620 may be configured as multiple instances. According to one embodiment, the memory 1620 may store programs to perform UE transmission and reception operation according to whether the base station mode is base station energy saving mode or base station normal mode, which has been described as embodiments of the disclosure.

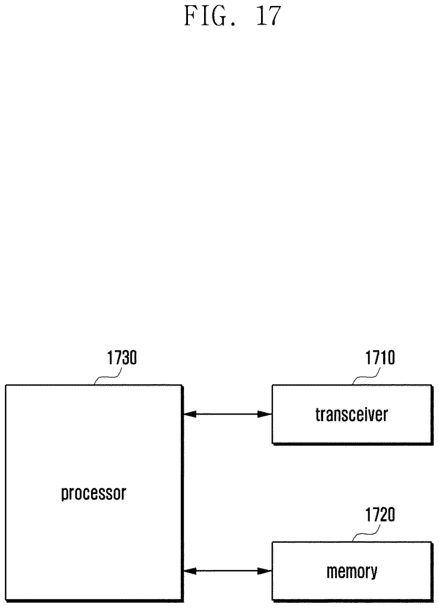

FIG. 17 is a block diagram showing an example of the structure of a base station according to an embodiment of the disclosure.

As shown in FIG. 17, the base station of the disclosure may include a processor 2830, a transceiver 2810, and a memory 2820. However, the components of the base station are not limited to those described above. For example, the base station may include more or fewer components than the above-described components. In addition, the processor 1730, transceiver 1710, and memory 1720 may be implemented in the form of a single chip.

The processor 1730 may control a series of processes so that which the base station can operate according to the above-described embodiments of the disclosure. For example, **the processor 1730** may control components of the base station to perform a method of scheduling a UE depending on whether the base station mode is base station energy saving mode or base station normal mode according to an embodiment of the present disclosure. The processor 1730 may be configured as one or multiple instances, and the processor 1730 may execute programs stored in the memory 1720 to perform the method of scheduling a UE according to whether the base station mode of the disclosure described above is base station energy saving mode or base station normal mode.

The transceiver 1710 may transmit and receive signals to and from a UE. The signals transmitted and received to and from a UE may include control information, and data. The transceiver 1710 may be composed of an RF transmitter that up-converts the frequency of a signal to be transmitted and amplifies the signal, and an RF receiver that low-noise amplifies a received signal and down-converts the frequency thereof. However, this is only an embodiment of the transceiver 1710, and the components of the transceiver 1710 are not limited to the RF transmitter and RF receiver. Additionally, the transceiver 1710 may receive a signal through a radio channel and output it to the processor 1730, and may transmit a signal output from the processor 1730 through a radio channel.

According to an embodiment, the memory 1720 may store programs and data necessary for the operation of the base station. Additionally, the memory 1720 may store control information or data included in signals transmitted and received by the base station. The memory 1720 may be composed of a storage medium such as ROM, RAM, hard disk, CD-ROM, and DVD, or a combination of storage media. Further, the memory 1720 may be configured as multiple instances. According to one embodiment, the memory 1720 may store programs to perform a method of scheduling a UE according to whether the base station mode is base station energy saving mode or base station general mode, which is embodiments of the disclosure described above.

In specific embodiments of the disclosure described above, the elements included in the disclosure are expressed in a singular or plural form according to the presented specific embodiment. However, the singular or plural expression is appropriately selected for ease of description according to the presented situation, and the disclosure is not limited by a single element or plural elements. Those elements described in a plural form may be configured as a single element, and those elements described in a singular form may be configured as plural elements.

Meanwhile, preferred embodiments of the disclosure are disclosed in this specification and drawings. Although specific terms are used herein, they are used in a general sense to easily explain the technical content of the disclosure and aid understanding of the disclosure, and are not intended to limit the scope of the disclosure. It is obvious to those of ordinary skill in the art to which the disclosure belongs that other modifications based on the technical idea of the disclosure may be carried out in addition to the embodiments disclosed herein. Additionally, the above embodiments may be operated in combination with each other as needed.

Meanwhile, specific embodiments have been described in the detailed description of the disclosure, but various modifications are possible without departing from the scope of the disclosure. Therefore, the scope of the disclosure should not be limited to those embodiments described above, but should be determined by the appended claims and their equivalents.

## Claims

1. A method performed by a base station in a communication system, the method comprising:

   transmitting information indicating a base station energy saving mode to a terminal;
   identifying a mode switching from a normal mode to the base station energy saving mode; and
   transmitting a downlink signal and receiving an uplink signal to and from the terminal according to the base station energy saving mode,
   wherein the base station energy saving mode includes at least one of saving base station energy through control of downlink signal transmission of the base station, switching off antennas or power amplifiers of the base station, or adjusting one of a downlink transmission bandwidth or/and power spectral density of the base station.

2. The method of claim 1, further comprising:

   receiving a measurement report from the terminal,

wherein the measurement report includes at least one of measurement information on the base station energy saving mode based on a reference signal to which base station energy saving mode is applied transmitted after the mode switching, or measurement information on the normal mode based on a reference signal to which normal mode is applied before the mode switching.

3. The method of claim 1, wherein the information indicating the base station energy saving mode includes at least one of information indicating the mode switching, information about a timing of the mode switching, information about a cell or bandwidth part to which base station energy saving mode is to be applied, information about the downlink transmission bandwidth or/and power spectral density to be applied in base station energy saving mode, information about a physical channel or/and physical signal to be changed in the base station energy saving mode, information about a time gap for the mode switching, or measurement reporting configuration information.

4. The method of claim 1, wherein a time gap for changing power amplifiers, radio frequency (RF) components, or baseband components of the base station is present before or after the mode switching.

5. A method performed by a terminal in a communication system, the method comprising:

receiving information indicating a base station energy saving mode from a base station;
identifying a timing of a mode switching from a normal mode of the base station to the base station energy saving mode; and
transmitting an uplink signal and receiving a downlink signal to and from the base station according to the base station energy saving mode,
wherein the base station energy saving mode includes at least one of saving base station energy through control of downlink signal transmission of the base station, switching off antennas or power amplifiers of the base station, or adjusting one of a downlink transmission bandwidth or/and power spectral density of the base station.

6. The method of claim 5, further comprising:

transmitting a measurement report to the base station,
wherein the measurement report includes at least one of measurement information on the base station energy saving mode generated through measuring a reference signal to which base station energy saving mode is applied transmitted after the mode switching, or measurement information on the normal mode generated through measuring a reference signal to which normal mode is applied before the mode switching.

7. The method of claim 5, wherein the information indicating the base station energy saving mode includes at least one of information indicating the mode switching, information about a timing of the mode switching, information about a cell or bandwidth part to which base station energy saving mode is to be applied, information about the downlink transmission bandwidth or/and power spectral density to be applied in base station energy saving mode, information about a physical channel or/and physical signal to be changed in the base station energy saving mode, information about a time gap for the mode switching, or measurement reporting configuration information.

8. The method of claim 5, wherein a time gap for changing power amplifiers, radio frequency (RF) components, or baseband components of the base station is present before or after the mode switching.

9. A base station in a communication system, comprising:

a transceiver; and
a controller t configured to transmit information indicating a base station energy saving mode to a terminal, identify a mode switching from a normal mode to the base station energy saving mode, and transmit a downlink signal and receiving an uplink signal to and from the terminal according to the base station energy saving mode,
wherein the base station energy saving mode includes at least one of saving base station energy through control of downlink signal transmission of the base station, switching off antennas or power amplifiers of the base station, or adjusting one of a downlink transmission bandwidth or/and power spectral density of the base station.

10. The base station of claim 9, wherein:

the controller is further configured to control receiving a measurement report from the terminal, and
the measurement report includes at least one of measurement information on the base station energy saving mode based on a reference signal to which base station energy saving mode is applied transmitted after the mode switching, or measurement information on the normal mode based on a reference signal to which normal mode is applied before the mode switching.

11. The base station of claim 9, wherein the information indicating the base station energy saving mode includes at least one of information indicating the mode switching, information about a timing of the mode switching, information about a cell or bandwidth part to which base station energy saving mode is to be applied, information about the downlink transmission bandwidth or/and power spectral density to be applied in base station energy saving mode, information about a physical channel or/and physical signal to be changed in base station energy saving mode, information about a time gap for mode switching, or measurement reporting configuration information.

12. The base station of claim 9, wherein a time gap for changing power amplifiers, radio frequency (RF) components, or baseband components of the base station is present before or after the mode switching.

13. A method performed by a terminal in a communication system, the method comprising:

receiving information indicating base station energy saving mode from a base station;
identifying a timing of mode switching from normal mode of the base station to base station energy saving mode; and
transmitting an uplink signal and receiving a downlink signal to and from the base station according to base station energy saving mode,
wherein the base station energy saving mode includes at least one of saving base station energy through control of downlink signal transmission of the base station, switching off antennas or power amplifiers of the base station, or adjusting one of a downlink transmission bandwidth or/and power spectral density of the base station.

14. The method of claim 13, further comprising transmitting a measurement report to the base station, and wherein the measurement report includes at least one of measurement information as to base station energy saving mode generated through measuring a reference signal to which base station energy saving mode is applied transmitted after the mode switching, or measurement information as to normal mode generated through measuring a reference signal to which normal mode is applied before the mode switching.

15. The method of claim 13, wherein the information indicating base station energy saving mode includes at least one of information indicating mode switching, information about a timing of mode switching, information about a cell or bandwidth part to which base station energy saving mode is to be applied, information about the downlink transmission bandwidth or/and power spectral density to be applied in base station energy saving mode, information about a physical channel or/and physical signal to be changed in base station energy saving mode, information about a time gap for mode switching, or measurement reporting configuration information.

# FIG. 1

Frame [114]

Subframe [105]

...... ......

Slot [106]

Transmission bandwidth $N_{BW}$ subcarriers [104]

$N^{RB}_{sc}$ subcarriers [110]

...

...

...

Resource element [112]

$N^{slots}_{symb}$ symbols [102]

frequency

time

# FIG. 2

SS/PBCH periodicity = P

Half frame = 0.5 ms

SS/PBCH block (210)

#0 [211]  #1  #2  #3  #4 [212]  ......  #L-1

time

t1 (201)

t2 (202)

(205) UE1

(203)

#d0

#d1

#d2    Beam sweeping

#d3

gNB

#d4

UE2 (206)

(204)

# FIG. 3

# FIG. 4

401
UE

402
gNB

request for UE capability information
(410)

UE capability information
(420)

# FIG. 5

Power spectral density

PSD$_A$
(502)

Transmission bandwidth, BW$_A$
(501)

frequency

FIG. 6

Power spectral density

PSD$_A$
(602)

PSD$_B$
(603)

Transmission bandwidth, BW$_A$
(601)

frequency

FIG. 7

FIG. 8

Power spectral density

Reduced bandwidth, BW$_B$
(804)

PSD$_A$
(802)

PSD$_B$
(803)

frequency

Transmission bandwidth, BW$_A$
(801)

FIG. 9

Time gap (candidates)
(960)

(970)

| A | B | | | | | | | | C | D | | | |

time

Normal mode
(910)

T1
(940)

Energy Saving mode
(920)

T2
(950)

Normal mode
(930)

# FIG. 10A

EP 4 440 204 A1

FIG. 10B

EP 4 440 204 A1

# FIG. 11A

1101

Energy saving mode
indication

1108

Energy saving mode

n

1102

n+k1-1

1104

n+k1

1103

Normal mode

1109

# FIG. 11B

# FIG. 12

# FIG. 13

START

UE reports base station energy saving mode support capability ~1301

receive base station mode change command ~1302

respond to base station mode change command ~1303

update UE configurations according to base station mode change ~1304

perform transmission and reception according to changed base station mode ~1305

END

# FIG. 14

```
                    ┌─────────────┐
                    │    START    │
                    └──────┬──────┘
                           │
                           ▼
    ┌──────────────────────────────────────────────┐
    │ obtain UE's base station energy saving mode   │──~1401
    │ support capability                            │
    └───────────────────┬──────────────────────────┘
                        │
                        ▼
    ┌──────────────────────────────────────────────┐
    │      transmit base station mode change        │──~1402
    │              command                          │
    └───────────────────┬──────────────────────────┘
                        │
                        ▼
    ┌──────────────────────────────────────────────┐
    │   obtain response to base station mode        │──~1403
    │           change command                      │
    └───────────────────┬──────────────────────────┘
                        │
                        ▼
    ┌──────────────────────────────────────────────┐
    │   perform scheduling according to changed     │──~1404
    │           base station mode                   │
    └───────────────────┬──────────────────────────┘
                        │
                        ▼
                 ┌─────────────┐
                 │     END     │
                 └─────────────┘
```

FIG. 15

EP 4 440 204 A1

FIG. 16

**1630**

**1610**

processor

transceiver

**1620**

memory

FIG. 17

1730

1710

processor

transceiver

1720

memory

<table>
<tr><td colspan="2">**INTERNATIONAL SEARCH REPORT**</td><td>International application No.<br><br>**PCT/KR2022/019735**</td></tr>
</table>

**A.    CLASSIFICATION OF SUBJECT MATTER**

**H04W 52/02**(2009.01)i; **H04W 72/04**(2009.01)i

According to International Patent Classification (IPC) or to both national classification and IPC

**B.    FIELDS SEARCHED**

Minimum documentation searched (classification system followed by classification symbols)

H04W 52/02(2009.01); H04W 24/00(2009.01); H04W 24/10(2009.01); H04W 4/70(2018.01); H04W 76/28(2018.01); H04W 88/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기지국(base station), 에너지 세이빙 모드(energy saving mode), 지시 정보 (indication information), 모드 전환(mode changing)

**C.    DOCUMENTS CONSIDERED TO BE RELEVANT**

| Category* | Citation of document, with indication, where appropriate, of the relevant passages | Relevant to claim No. |
|---|---|---|
| Y<br><br>A | US 2012-0275335 A1 (HUANG, Yinghua) 01 November 2012 (2012-11-01)<br>    See paragraphs [0016]-[0041]; claims 1, 3 and 7; and figure 1. | 1-3,5-7,9-11,13-15<br><br>4,8,12 |
| Y | KR 10-2013-0100360 A (MOTOROLA MOBILITY LLC) 10 September 2013 (2013-09-10)<br>    See paragraphs [0007]-[0035]; claims 1 and 3; and figures 1-3. | 1-3,5-7,9-11,13-15 |
| Y | KR 10-2021-0008097 A (DATANG MOBILE COMMUNICATIONS EQUIPMENT CO., LTD.) 20 January 2021 (2021-01-20)<br>    See claim 8. | 2,6,10,14 |
| A | WO 2014-036692 A1 (BROADCOM CORPORATION) 13 March 2014 (2014-03-13)<br>    See pages 7-9; and figure 2. | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 February 2023** | **24 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/019735**

C.    DOCUMENTS CONSIDERED TO BE RELEVANT

| Category* | Citation of document, with indication, where appropriate, of the relevant passages | Relevant to claim No. |
|---|---|---|
| A | KR 10-2014-0072124 A (INTERDIGITAL PATENT HOLDINGS, INC.) 12 June 2014 (2014-06-12)<br>See claims 13-17. | 1-15 |

INTERNATIONAL SEARCH REPORT
Information on patent family members

| International application No. |
|---|
| **PCT/KR2022/019735** |

| Patent document cited in search report | | | Publication date (day/month/year) | Patent family member(s) | | | Publication date (day/month/year) |
|---|---|---|---|---|---|---|---|
| US | 2012-0275335 | A1 | 01 November 2012 | CN | 101778459 | A | 14 July 2010 |
| | | | | CN | 101778459 | B | 27 June 2012 |
| | | | | EP | 2523508 | A1 | 14 November 2012 |
| | | | | EP | 2523508 | B1 | 28 August 2013 |
| | | | | EP | 2665314 | A1 | 20 November 2013 |
| | | | | EP | 2665314 | B1 | 22 October 2014 |
| | | | | ES | 2527280 | T3 | 22 January 2015 |
| | | | | WO | 2011-082676 | A1 | 14 July 2011 |
| KR | 10-2013-0100360 | A | 10 September 2013 | BR | 112013016787 | A2 | 11 October 2016 |
| | | | | CN | 103283283 | A | 04 September 2013 |
| | | | | CN | 103283283 | B | 06 June 2017 |
| | | | | CN | 107197506 | A | 22 September 2017 |
| | | | | CN | 107197506 | B | 16 April 2019 |
| | | | | EP | 2659715 | A1 | 06 November 2013 |
| | | | | EP | 2659715 | B1 | 03 December 2014 |
| | | | | EP | 2824975 | A1 | 14 January 2015 |
| | | | | EP | 2824975 | B1 | 16 March 2016 |
| | | | | KR | 10-1726028 | B1 | 11 April 2017 |
| | | | | KR | 10-2014-0105617 | A | 01 September 2014 |
| | | | | MX | 2013007516 | A | 16 September 2013 |
| | | | | US | 2012-0163305 | A1 | 28 June 2012 |
| | | | | US | 8902830 | B2 | 02 December 2014 |
| | | | | WO | 2012-092066 | A1 | 05 July 2012 |
| KR | 10-2021-0008097 | A | 20 January 2021 | CN | 110557811 | A | 10 December 2019 |
| | | | | CN | 110557811 | B | 26 October 2021 |
| | | | | EP | 3806549 | A1 | 14 April 2021 |
| | | | | TW | 202005444 | A | 16 January 2020 |
| | | | | TW | I759593 | B | 01 April 2022 |
| | | | | US | 2021-0204216 | A1 | 01 July 2021 |
| | | | | WO | 2019-233188 | A1 | 12 December 2019 |
| WO | 2014-036692 | A1 | 13 March 2014 | None | | | |
| KR | 10-2014-0072124 | A | 12 June 2014 | AR | 079864 | A1 | 22 February 2012 |
| | | | | AU | 2011-203949 | A1 | 02 August 2012 |
| | | | | AU | 2011-203949 | B2 | 09 July 2015 |
| | | | | CN | 102714812 | A | 03 October 2012 |
| | | | | CN | 102714812 | B | 16 March 2016 |
| | | | | CN | 104618974 | A | 13 May 2015 |
| | | | | EP | 2537364 | A2 | 26 December 2012 |
| | | | | EP | 2537364 | B1 | 12 November 2014 |
| | | | | EP | 2836005 | A2 | 11 February 2015 |
| | | | | EP | 2836005 | A3 | 25 March 2015 |
| | | | | EP | 2836005 | B1 | 30 November 2016 |
| | | | | JP | 2013-528959 | A | 11 July 2013 |
| | | | | JP | 5890319 | B2 | 22 March 2016 |
| | | | | KR | 10-1550959 | B1 | 07 September 2015 |
| | | | | KR | 10-2012-0113779 | A | 15 October 2012 |
| | | | | TW | 201143491 | A | 01 December 2011 |
| | | | | TW | I539848 | B | 21 June 2016 |
| | | | | US | 2012-0015657 | A1 | 19 January 2012 |
| | | | | US | 2016-0174150 | A1 | 16 June 2016 |

Form PCT/ISA/210 (patent family annex) (July 2022)

**INTERNATIONAL SEARCH REPORT**
Information on patent family members

International application No.

**PCT/KR2022/019735**

| Patent document cited in search report | Publication date (day/month/year) | Patent family member(s) | | | Publication date (day/month/year) |
|---|---|---|---|---|---|
| | | US | 9301225 | B2 | 29 March 2016 |
| | | WO | 2011-085238 | A2 | 14 July 2011 |
| | | WO | 2011-085238 | A3 | 19 July 2012 |

Form PCT/ISA/210 (patent family annex) (July 2022)